# EUROPEAN PATENT APPLICATION

(11) **EP 4 543 123 A1**
(43) Date of publication of application: **23.04.2025**
(21) Application number: 23823858.8
(22) Date of filing: 09.06.2023
(51) Int. Cl.: H04W 72/20, H04W 28/06, H04W 72/512, H04W 84/12

(54) **ACCESS POINT, TERMINAL, AND COMMUNICATION METHOD**

(30) Priority: 15.06.2022 JP 2022096537
(71) Applicant: Panasonic Intellectual Property Corporation of America, Torrance, CA 90504 (US)
(72) Inventor: TAKATA, Tomofumi, Kadoma-shi, Osaka 571-0057 (JP); IWAI, Takashi, Kadoma-shi, Osaka 571-0057 (JP); URABE, Yoshio, Kadoma-shi, Osaka 571-0057 (JP); MOTOZUKA, Hiroyuki, Kadoma-shi, Osaka 571-0057 (JP)
(74) Representative: Grünecker Patent- und Rechtsanwälte PartG mbB
(86) International application number: PCT/JP2023/021592
(87) International publication number: WO 2023/243568

(57) **Abstract**

This access point is provided with: a control circuit that generates control information pertaining to a resource used for transmission of a second signal which is generated during transmission of a first signal; and a transmission circuit that transmits the control information.

## Description

### Technical Field

The present disclosure relates to an access point, a terminal, and a communication method.

### Background Art

In the Institute of Electrical and Electronics Engineers (IEEE), studies have been carried out on the IEEE 802.11be standard (hereinafter, also referred to as "11be") for the next generation radio Local Area Network (LAN), which is the successor to the IEEE 802.11ax standard (hereinafter, also referred to as "11ax"). For example, 11ax is also called High Efficiency (HE), and 11be is also called Extreme High Throughput (EHT). Further, discussions on the requirements for a successor standard to 11be, which aims for even lower latency or improved throughput, are also ongoing (see, for example, Non-Patent Literature (hereinafter, referred to as "NPL") 1). For example, the successor to 11be is also referred to as "EHTplus" or "beyond 11be."

### Citation List

### Non-Patent Literature

NPL 1
   IEEE P802.11-22 /0032r0, "Thoughts on Next Generation After 802.11be"
NPL 2
   IEEE 802.11-21/1333r4, "CC36 CR for Trigger frame on Common Info field format"
NPL 3
   IEEE 802.11-21/0259r4, "Proposed Draft Specification for Trigger frame for EHT"
NPL 4
   IEEE P802.11ax /D8.0
NPL 5
   IEEE 802.11-21/1852r1, "Overlaid UL transmissions enabling low latency for emergency use cases"

### Summary of Invention

However, a control method for signal transmission in radio communication, such as a wireless LAN, has not been sufficiently studied.

Anon-limiting embodiment of the present disclosure facilitates providing an access point, a terminal, and a communication method each capable of improving the efficiency of transmission control in radio communication.

An access point according to an embodiment of the present disclosure includes: control circuitry, which, in operation, generates control information on a resource used for transmission of a certain signal that occurs during transmission of a first signal, the certain signal being a second signal; and transmission circuitry, which, in operation, transmits the control information.

It should be noted that general or specific embodiments may be implemented as a system, an apparatus, a method, an integrated circuit, a computer program, a storage medium, or any selective combination thereof.

According to an embodiment of the present disclosure, it is possible to improve the efficiency of transmission control in radio communication, for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary format of an Extreme High Throughput (EHT) Trigger-based (TB) Physical layer (PHY) Protocol Data Unit (PPDU) (EHT TB PPDU);
FIG. 2 illustrates an exemplary Common Info field;
FIG. 3 illustrates an exemplary User Info field;
FIG. 4 illustrates an exemplary Special User Info field;
FIG. 5 illustrates an exemplary Trigger type;
FIG. 6 illustrates an exemplary data transmission;
FIG. 7 illustrates an exemplary transmission of uplink data that is overridden on another data;
FIG. 8 illustrates an exemplary Pre-emption transmission;
FIG. 9 is a block diagram illustrating a part of an exemplary configuration of an access point (AP);
FIG. 10 is a block diagram illustrating an exemplary configuration of a part of a terminal (STA: Station);
FIG. 11 is a block diagram illustrating an exemplary configuration of an AP;
FIG. 12 is a block diagram illustrating an exemplary configuration of the terminal;
FIG. 13 illustrates an exemplary transmission condition based on LENGTH;
FIG. 14 illustrates an exemplary transmission condition based on a transmission timing;
FIG. 15 illustrates an exemplary timing of Pre-emption transmission;
FIG. 16 illustrates an exemplary Trigger Dependent User info field;
FIG. 17 illustrates an exemplary format of a User Info field;
FIG. 18 illustrates an exemplary format of a User Info field;
FIG. 19 illustrates an exemplary format of a User Info field;
FIG. 20 illustrates an exemplary Pre-emption transmission;
FIG. 21 illustrates an exemplary Pre-emption transmission;
FIG. 22 illustrates an exemplary Pre-emption transmission;
FIG. 23 illustrates an exemplary Pre-emption transmission;
FIG. 24 illustrates an exemplary Pre-emption transmission;
FIG. 25 illustrates an exemplary format of an EHT multi-user (MU) PPDU (ETH MU PPDU);
FIG. 26 is a block diagram illustrating an exemplary configuration of an AP;
FIG. 27 is a block diagram illustrating an exemplary configuration of a terminal;
FIG. 28 illustrates an exemplary format of a Pre-emption Indicator;
FIG. 29 illustrates an exemplary format of a Pre-emption Indicator;
FIG. 30 illustrates an exemplary format of a PPDU including a Pre-emption Indicator; and
FIG. 31 illustrates an exemplary format of a PPDU including a Pre-emption Indicator.

### Description of Embodiments

Hereinafter, embodiments of the present disclosure will be described in detail with reference to the accompanying drawings.

In HE, the introduction of uplink orthogonal frequency-division multiple access (OFDMA) has been defined. An access point (AP, or also referred to as "base station") transmits a control signal (hereinafter, referred to as "Trigger frame") that indicates a transmission of an uplink OFDMA signal to a plurality of terminals (STAs or "non-AP STAs") that are within the range of the AP.

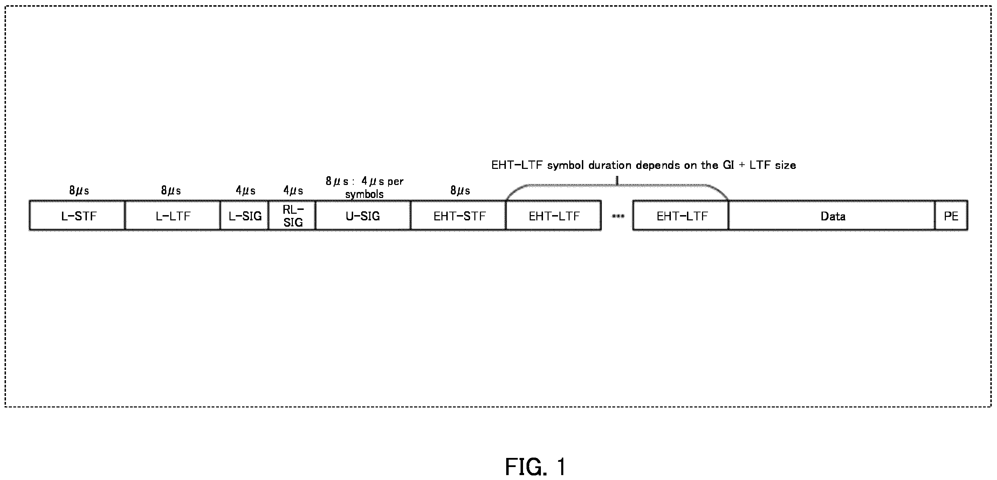

The terminal transmits an uplink OFDMA signal based on the information indicated by the Trigger frame. FIG. 1 illustrates an exemplary format of a trigger-based physical layer (PHY) protocol data unit (TB PPDU) used for an uplink OFDMA signal. In FIG. 1, Legacy Short Training Field (L-STF)/Legacy Long Training Field (L-LTF)/Legacy Signal (L-SIG)/Repeated Legacy Signal (RL-SIG)/Universal Signal (U-SIG) are fields to which the same size of Fast Fourier Transform (FFT) or Discrete Fourier Transform (DFT) (hereinafter, referred to as FFT/DFT) as the legacy (for example, IEEE 802.11a or IEEE 802.11n) and/or OFDM with the same subcarrier spacing as the legacy are applied, and are also referred to as "pre-EHT modulated fields," "legacy preamble," or "legacy fields." Further, in FIG. 1, the fields after EHT-STF are fields to which the FFT/DFT size defined in EHT and/or the OFDM with subcarrier spacing defined in EHT are applied, and are also referred to as "EHT modulated fields" or "non-legacy fields."

Anew TB PPDU format may be defined in EHTplus. The new TB PPDU format may include, for example, a non-legacy STF (corresponding to EHT-STF in FIG. 1) and a non-legacy LTF (corresponding to EHT-LTE in FIG. 1).

Also in EHT, reusing an HE trigger frame as a control signal for indicating the transmission of an uplink OFDMA signal to a plurality of terminals has been agreed (see, for example, NPL 2).

Similarly, in EHTplus, a Trigger frame can be reused as a control signal for indicating the transmission of an uplink signal to a plurality of terminals.

The trigger frame includes, for example, a Common Info field, a User Info List, and a Special User Info field in addition to a Medium Access Control (MAC) header (see, for example, NPLs 2 and 3). The Common Info field includes, for example, information common to a plurality of terminals on which OFDMA multiplexing is performed. The User Info List includes, for example, a plurality of User Info fields. The User Info field includes individual and specific information for each terminal. The Special User Info field includes common information for a terminal supporting EHT (for example, referred to as "EHT terminal"). Further, the Special User Info field may include common information for a terminal supporting EHTplus (for example, referred to as "EHTplus terminal").

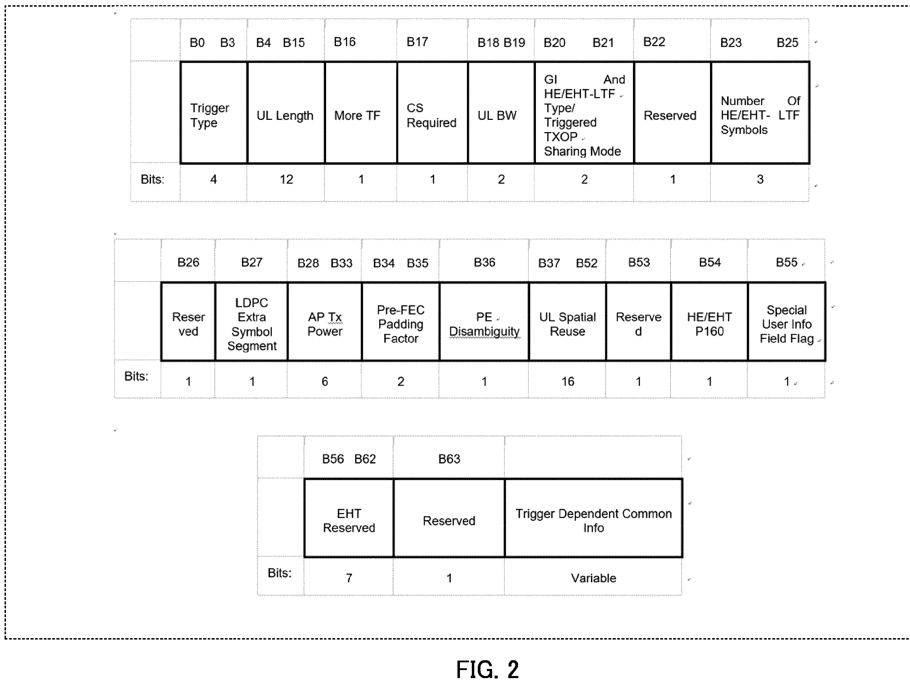

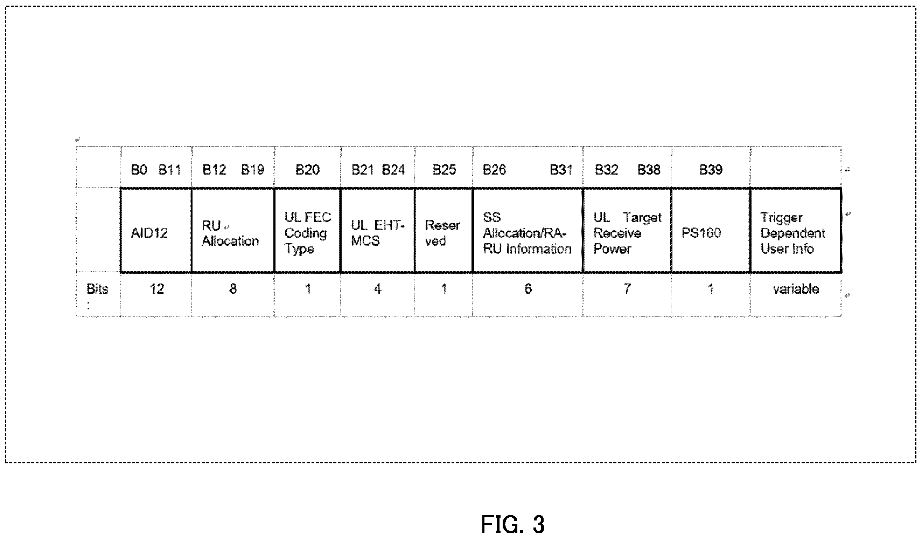

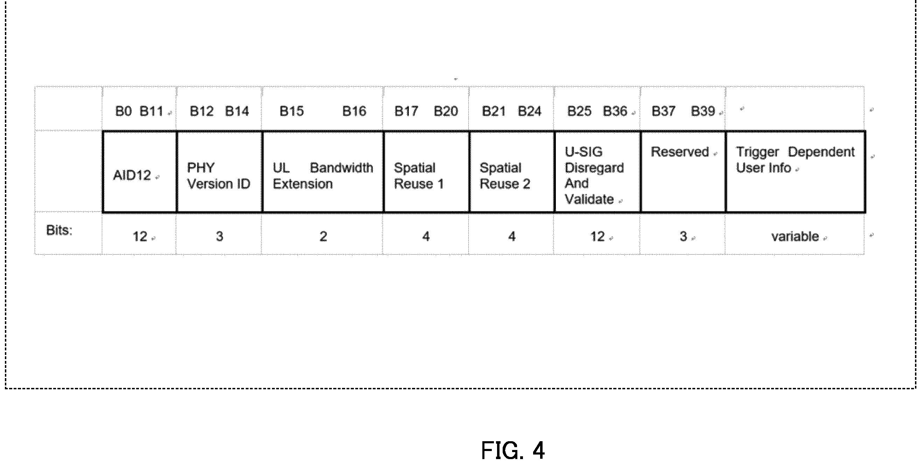

FIG. 2 illustrates an exemplary Common Info field (Common Info field, EHT variant). FIG. 3 illustrates an exemplary User Info field (User Info field, EHT variant). FIG. 4 illustrates an exemplary Special User Info field. FIGS. 2, 3, and 4 illustrate exemplary configurations under consideration in EHT (see, for example, NPLs 2 and 3).

In a case where a Trigger frame is transmitted for EHT terminals, a Special User Info field may be provided. For example, the Special User Info field is a field in which a special AID (Association ID, for example, AID = 2007) is configured in the User info field. In the Special User Info field, information common to terminals, such as uplink bandwidth information for EHT terminals, may be indicated. Also in EHTplus, similarly to EHT, information common to EHTplus terminals may be indicated in the Special User Info field using a special AID (for example, AID = 2006) for EHTplus terminals.

The Trigger Type subfield in the Common Info field includes information indicating the type of the Trigger frame. The type of Trigger frame may be the type of signal that the AP causes the terminal to transmit.

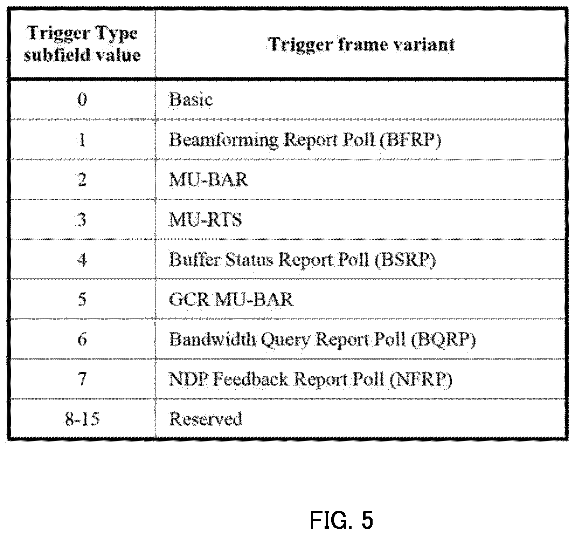

FIG. 5 illustrates an exemplary Trigger Type. FIG. 5 illustrates a correspondence between the value of the Trigger Type subfield and the type of the Trigger frame indicated by the value in a table format. In HE, the types shown in FIG. 5 are defined as Trigger Types (see, for example, NPL 4). For example, the Trigger Dependent Common Info subfield illustrated in FIG. 2 includes common information that depends on the Trigger Type.

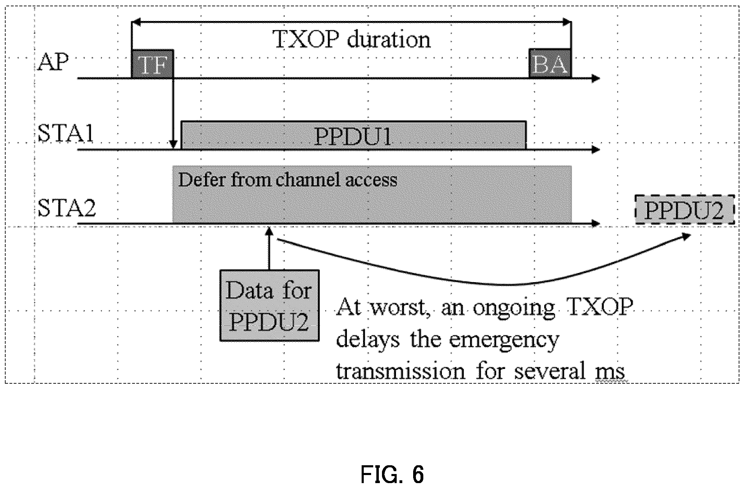

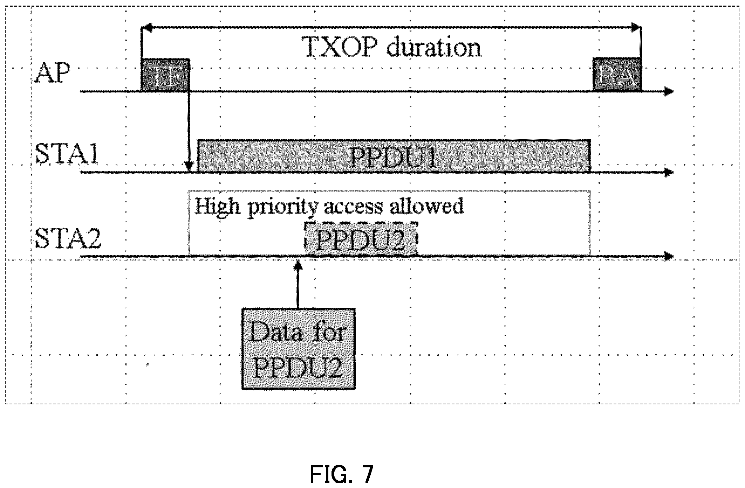

In the control of the Trigger frame, for example, as illustrated in FIG. 6, while a certain terminal (for example, STA 1) is transmitting an uplink signal (PPDU 1), another terminal (for example, STA 2) cannot interrupt and transmit an uplink signal. In this case, for example, when transmission data with a higher urgency occurs, another terminal waits for the next transmission opportunity (for example, next Transmission Opportunity (TXOP) period) to transmit, resulting in an increase in delay. Thus, for example, as illustrated in FIG. 7, a method for overriding (overlaying) a transmission of data with high priority (for example, emergency data, for example, PPDU 2) on the transmission of data (PPDU 1) by another terminal (for example, transmitting data (for example, PPDU 2) in a frequency band that partially or entirely overlaps with the uplink signal (PPDU 1)) has been discussed (see, for example, NPL 5).

A control method for overriding and transmitting data (for example, emergency data) while another terminal is transmitting a signal, and a format of a Trigger frame have not been sufficiently discussed.

In one non-limiting embodiment of the present disclosure, a control method for overriding and transmitting data during signal transmission by another terminal, and an exemplary format of a Trigger frame will be described.

### (Embodiment 1)

In the present embodiment, a configuration of control information (for example, Trigger frame) for a certain terminal to override and transmit data (for example, emergency data) during uplink signal transmission by another terminal will be described.

Hereinafter, an operation in which a certain terminal overrides and transmits data (for example, emergency data) during signal transmission by another terminal will be referred to as "Pre-emption."

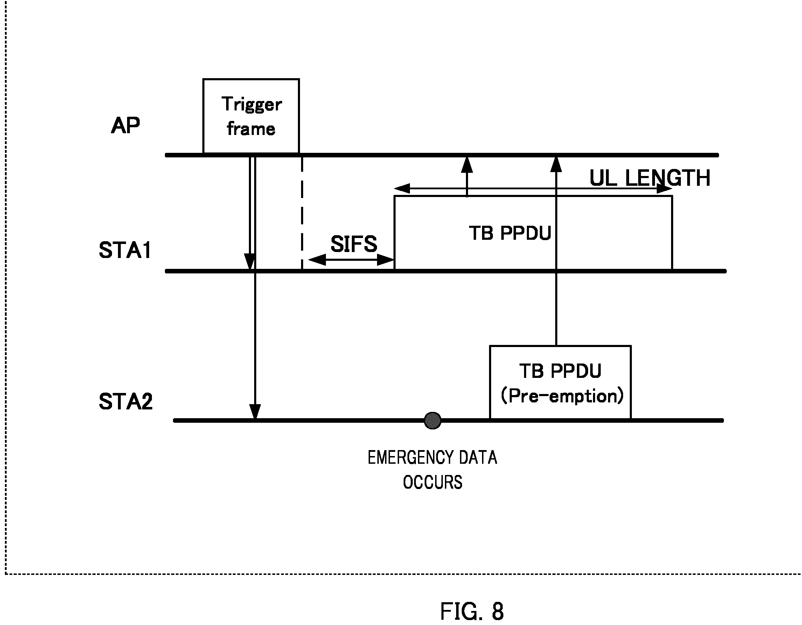

For example, FIG. 8 illustrates an exemplary Pre-emption transmission. In the example illustrated in FIG. 8, a transmission of an uplink OFDM signal (TB PPDU) is indicated to STA 1 by a Trigger frame. Thus, as illustrated in FIG. 8, after reception of the Trigger frame, STA 1 transmits the uplink OFDM signal at a timing after a Short Inter Frame Space (SIFS), in a time corresponding to the time length (for example, UL LENGTH) of the uplink OFDM signal indicated by the Trigger frame. Further, in FIG. 8, for example, emergency data occurs in STA 2 in the UL LENGTH interval. Thus, as illustrated in FIG. 8, STA2 transmits a signal (for example, TB PPDU) to the same AP as the AP to which STA 1 transmits, in the entire band or a part of the band of the TB PPDU transmitted by STA 1, at a specific time (for example, in the interval of UL LENGTH), by overlying the signal on the TB PPDU of STA 1.

The transmission operation of STA2 in FIG. 8 is referred to as Pre-emption (or Pre-emption transmission).

Data controlled in Pre-emption (for example, emergency data) may be, for example, data for which the time until the data is discarded is equal to or less than a threshold, data for which the allowable delay is equal to or less than a threshold, or simply data that occurs in an interval corresponding to the LENGTH indicated by the Trigger frame.

Further, for example, the operation of transmitting emergency data that occurs in the LENGTH indicated by the Trigger frame after the terminal receives the Trigger frame in the LENGTH may also be considered as Pre-emption transmission.

Further, in the example of FIG. 8, an uplink transmission has been described as an example, but the operation of transmitting, in the LENGTH of a downlink signal, data for another terminal (for example, emergency data of a downlink signal) that has occurred while an AP is transmitting a downlink signal may also be considered as Pre-emption.

### [Configuration of Radio Communication System]

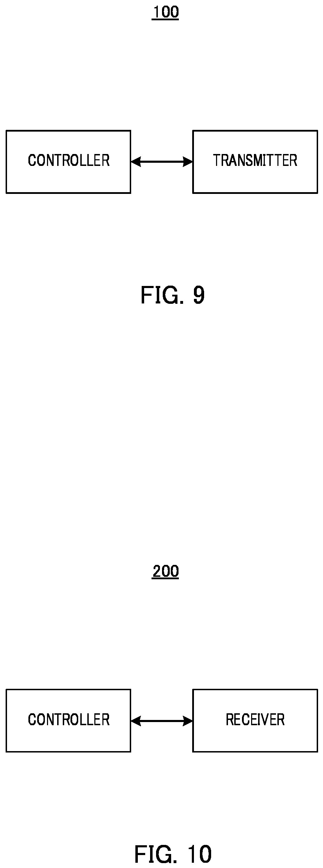

The radio communication system according to the present embodiment may include, for example, AP 100 illustrated in FIG. 9 and terminal (STA) 200 illustrated in FIG. 10. At least one of AP100 and Terminal 200 may exist in multiple units in a radio communication system. AP 100 may transmit control information (for example, a Trigger frame) indicating control of Pre-emption to terminal 200, for example. Terminal 200 may, for example, receive the Trigger frame and transmit Pre-emption data (for example, emergency data) to AP 100 based on the information indicated by the received Trigger frame.

Note that terminal 200 may be, for example, any of an EHT terminal and an EHTplus terminal.

Further, AP 100 receives Pre-emption data from each terminal 200, for example. Then, AP 100 separates the signal of the resource allocated to each terminal 200 from the reception signal, for example, and performs reception processing.

Further, AP 100 may be, for example, an AP that supports EHT or EHTplus. For example, when communicating with an EHTplus terminal, AP 100, which is the communication partner, may support EHTplus. Further, AP 100 may have backward compatibility. For example, AP 100 that supports EHTplus may be capable of communication with an HE terminal and an EHT terminal using a Trigger frame in addition to an EHTplus terminal.

FIG. 9 is a block diagram illustrating an exemplary configuration of a part of AP 100 according to an embodiment of the present disclosure. In AP 100 illustrated in FIG. 9, a controller (corresponding to, for example, control circuitry) generates control information on a resource used for the transmission of a second signal (for example, Pre-emption transmission) that occurs during the transmission of a first signal (for example, non-Pre-emption transmission). A transmitter (e.g., corresponding to transmission circuitry) transmits the control information.

FIG. 10 is a block diagram illustrating an exemplary configuration of a part of terminal 200 according to an embodiment of the present disclosure. In terminal 200 illustrated in FIG. 10, a receiver (corresponding to, for example, a reception circuitry) receives the control information on the resource used for the transmission of the second signal (Pre-emption transmission) that occurs during the transmission of the first signal (for example, non-Pre-emption transmission). A controller (corresponding to, for example, control circuitry) controls the transmission (for example, UL transmission) or reception (for example, DL reception) of the second signal based on the control information.

### [Embodiment of AP 100]

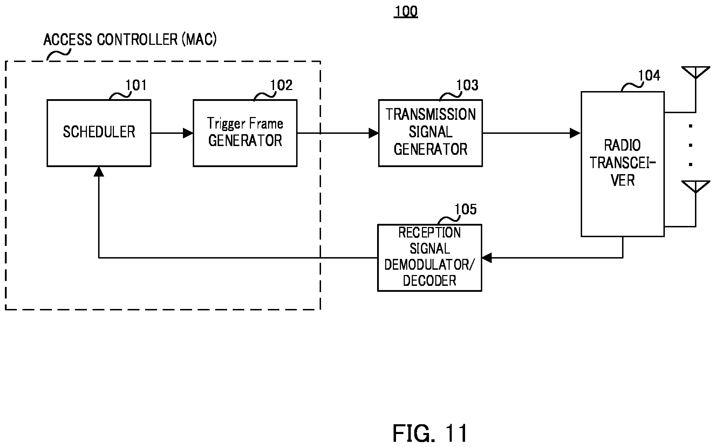

FIG. 11 is a block diagram illustrating an exemplary configuration of AP 100. AP 100 illustrated in FIG. 11 may include, for example, scheduler 101, Trigger frame generator 102, transmission signal generator 103, radio transceiver 104, and reception signal demodulator/decoder 105.

For example, scheduler 101 and Trigger frame generator 102 may be included in an access controller (for example, a MAC processor).

Further, at least one of scheduler 101, Trigger frame generator 102, transmission signal generator 103, and reception signal demodulator/decoder 105 illustrated in FIG. 11 may be included in, for example, the controller illustrated in FIG. 9. Further, radio transceiver 104 illustrated in FIG. 11 may be included in the transmitter illustrated in FIG. 9, for example.

Scheduler 101 may perform scheduling for terminal 200, for example. For example, scheduler 101 performs uplink resource allocation for terminal 200 that does not perform an Pre-emption transmission and performs an existing (or normal) TB-PPDU transmission (for example, non-Pre-emption transmission), determines information for identifying terminal 200 (for example, terminal ID), radio resource information for each terminal 200 (allocation band, Modulation and Coding Scheme (MCS), transmission power, and the like), and outputs the determined information to Trigger frame generator 102.

Further, scheduler 101, for example, performs uplink resource allocation for Pre-emption in at least a part of the resource allocated to terminal 200 that performs non-Pre-emption transmission, and outputs radio resource information (allocation band and the like) for Pre-emption control to Trigger frame generator 102.

Note that, for the allocation resource for Pre-emption, a resource different from the allocation resource for terminal 200 that performs non-Pre-emption transmission (for example, resource dedicated to Pre-emption) may be used. Using the resource dedicated to Pre-emption can reduce interference between terminal 200 that does not perform Pre-emption transmission and terminal 200 that performs Pre-emption transmission.

Trigger frame generator 102, for example, generates a Trigger frame including a Common Info field, a User Info field, and a Special User Info field based on a terminal ID inputted from scheduler 101, radio resource information of each terminal 200, and control information on Pre-emption. Trigger frame generator 102 outputs the generated Trigger frame to transmission signal generator 103.

Note that the Trigger frame including control information on Pre-emption may include a transmission condition for Pre-emption, which will be described later. Examples of the format of the Trigger frame including control information on Pre-emption and the transmission condition will be described later.

Transmission signal generator 103 performs, for example, error correction encoding and modulation processing on a transmission data signal including the Trigger frame inputted from Trigger frame generator 102, and outputs the modulated data signal to radio transceiver 104.

Note that, in a case where the modulated data signal is an orthogonal frequency division multiplexing (OFDM) signal, AP 100 (for example, transmission signal generator 103) may form the OFDM signal by mapping the modulated signal to a defined frequency resource, performing inverse fast Fourier transform (IFFT) or inverse discrete Fourier transform (IDFT) (hereinafter, referred to as IFFT/IDFT) processing to convert the signal into a time waveform, and adding a cyclic prefix (CP).

Radio transceiver 104 performs, for example, radio transmission processing, such as D/A conversion and up-conversion to a carrier frequency, on the modulation signal inputted from transmission signal generator 103, and transmits the signal after the radio transmission processing to terminal 200 via an antenna. Further, radio transceiver 104, for example, receives a signal transmitted from terminal 200 via an antenna, performs radio reception processing such as down-conversion to a baseband and A/D conversion on the received signal, and outputs the signal after the radio reception processing to reception signal demodulator/decoder 105.

Reception signal demodulator/decoder 105 performs, for example, demodulation processing and decoding processing on the signal inputted from radio transceiver 104, and acquires the data transmitted from terminal 200. For example, reception signal demodulator/decoder 105 may output information (for example, ACK) indicating whether the acquired data has been correctly decoded to scheduler 101. Note that, in a case where the signal inputted to reception signal demodulator/decoder 105 is an OFDM signal, AP 100 (for example, reception signal demodulator/decoder 105) may perform CP removal processing and FFT/DFT processing.

### [Exemplary Configuration of Terminal 200]

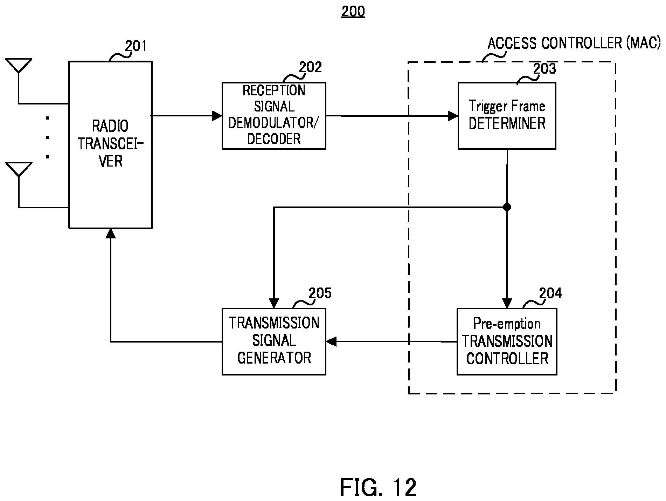

FIG. 12 is a block diagram illustrating an exemplary configuration of terminal 200. Terminal 200 illustrated in FIG. 12 may include, for example, radio transceiver 201, reception signal demodulator/decoder 202, Trigger frame determiner 203, Pre-emption transmission controller 204, and transmission signal generator 205.

For example, at least one of Trigger frame determiner 203 and Pre-emption transmission controller 204 may be included in an access controller (for example, a MAC processor).

Further, at least one of reception signal demodulator/decoder 202, Trigger frame determiner 203, Pre-emption transmission controller 204, and transmission signal generator 205 illustrated in FIG. 12 may be included in, for example, the controller illustrated in FIG. 10. Further, radio transceiver 201 illustrated in FIG. 12 may be included in, for example, the receiver illustrated in FIG. 10.

Radio transceiver 201, for example, receives a reception signal via an antenna, performs radio reception processing such as down-conversion and A/D conversion on the reception signal, and outputs the signal after the radio reception processing to reception signal demodulator/decoder 202. Further, radio transceiver 201, for example, performs radio transmission processing such as up-conversion and D/A conversion on the signal inputted from transmission signal generator 205, and transmits the signal after the radio transmission processing from the antenna.

Reception signal demodulator/decoder 202 performs, for example, demodulation processing and decoding processing on the reception data inputted from radio transceiver 201, and outputs the decoded signal as a received data signal. Further, reception signal demodulator/decoder 202, for example, outputs control information on the Trigger frame from the received data signal to Trigger frame determiner 203. Note that, in a case where the signal inputted to reception signal demodulator/decoder 202 is an OFDM signal, terminal 200 (for example, reception signal demodulator/decoder 202) may perform CP removal processing and FFT/DFT processing, for example.

Trigger frame determiner 203, for example, extracts information on the Common Info field, the User Info field, and the Special User Info field included in the Trigger frame, decodes terminal individual information including radio resource information (for example, including allocation band, MCS, transmission power, and the like), and outputs the decoded information to transmission signal generator 205. Further, Trigger frame determiner 203 decodes control information on Pre-emption in the information included in the Trigger frame, for example, and outputs the control information to Pre-emption transmission controller 204.

Pre-emption transmission controller 204, for example, controls Pre-emption transmission based on the control information on Pre-emption inputted from Trigger frame determiner 203. For example, Pre-emption transmission controller 204 may control the transmission of data (for example, emergency data) within the time length (for example, LENGTH) indicated by the Trigger frame based on the resource information of Pre-emption in the control information on Pre-emption.

Further, in a case where the Trigger frame includes a transmission condition for Pre-emption (for example, information on a transmission condition such as a transmittable Traffic Identifier (TID), LENGTH, transmission timing), Pre-emption transmission controller 204 may control the Pre-emption transmission in accordance with the transmission condition. Note that examples of transmission conditions for Pre-emption will be described later.

Pre-emption transmission controller 204 outputs information used for transmitting data of Pre-emption to transmission signal generator 205, for example.

Transmission signal generator 205 generates a signal (for example, TB PPDU) for uplink transmission based on control information (for example, LENGTH, MCS, and the like) inputted from Trigger frame determiner 203, for example. Further, transmission signal generator 205 generates a signal for Pre-emption transmission (for example, TB PPDU or Multi-user (MU) PPDU) based on the information inputted from Pre-emption transmission controller 204, for example. Transmission signal generator 205 performs error correction encoding and modulation processing on the generated transmission signal, and outputs the modulated data signal to radio transceiver 201. Note that, in a case where the modulation signal is an OFDM signal, terminal 200 (for example, transmission signal generator 205) may form the OFDM signal by performing IFFT/IDFT processing after mapping the modulation signal to a frequency resource, and adding a CP.

### [Operation Examples of AP 100 and Terminal 200]

Next, an operation example of AP 100 and terminal 200 according to the present embodiment will be described.

AP 100 generates control information on a resource (for example, Resource Unit (RU)) used for Pre-emption transmission, for example, and transmits the control information to terminal 200. Terminal 200, for example, receives control information on a resource used for Pre-emption transmission, and controls the transmission of a Pre-emption signal (for example, emergency data).

For example, AP 100 indicates control information on Pre-emption to a plurality of terminals 200 using a Trigger frame.

Hereinafter, a method for indicating Pre-emption transmission (transmission indication methods 1 and 2) will be described.

### [Transmission Indication Method 1]

In transmission indication method 1, control information on a resource used for Pre-emption transmission may be included in a User Info field of a Trigger frame.

For example, AP 100 may indicate a resource used for Pre-emption transmission (or whether or not Pre-emption transmission can be performed) to terminal 200 through the User Info field of the Trigger frame. Terminal 200 may perform Pre-emption transmission in the resource for Pre-emption indicated by the User Info field of the Trigger frame. For example, terminal 200 may be capable of transmitting Pre-emption data (for example, emergency data) at any timing within the interval corresponding to the time length (for example, LENGTH) indicated by the Trigger frame.

As described above, the indication of the resource used for Pre-emption transmission (or whether or not Pre-emption transmission can be performed) by the User Info field of the Trigger frame makes it possible for terminal 200 to perform Pre-emption transmission, and thus, for example, a delay in transmitting emergency data can be reduced.

Hereinafter, an example in which whether or not Pre-emption transmission can be performed, for example, information on a resource available for Pre-emption transmission is indicated using a User Info field (for example, AID12 subfield) of a Trigger frame illustrated in FIG. 3 will be described.

### <Resource Indication Example 1>

In Resource Indication Example 1, the resource indicated by the User Info field in which a value defined for Pre-emption is set in the AID12 subfield in the Trigger frame is a resource that can be used for Pre-emption transmission. For example, the AID of the User Info field including control information on a resource used for Pre-emption transmission may be a value associated with Pre-emption transmission.

For example, the value of the AID12 subfield defined for Pre-emption may be set to any one of the values that are not used in the existing standard (for example, 2008). In this case, terminal 200 may configure the resource indicated by the User Info field in which the AID12 subfield is set to 2008 as a resource that is available for Pre-emption transmission.

For example, Pre-emption transmission in a resource (RU) indicated by the RU Allocation subfield of the User Info field in which the AID12 subfield is set to 2008 may be permitted for all terminals 200.

Further, for example, in a case where the Trigger frame received by terminal 200 does not include a User Info field in which 2008 is set in the AID12 subfield, terminal 200 may determine that the Pre-emption transmission is not possible (Pre-emption transmission is not permitted).

Note that the method for indicating a resource available for Pre-emption transmission is not limited to a method using an RU Allocation subfield. For example, similarly to the control of the existing random access (UL OFDMA-based random access (UORA)), a method in which a plurality of RUs is indicated using RU Allocation and an RA-RU Information subfield may be used.

Further, for example, similarly to the random access, the configuration may be such that, based on the control of the OFDMA contention window (OCW), the Pre-emption transmission of terminal 200 of which an OBO (OFDM random access backoff) counter becomes 0 is enabled (or transmission is permitted), and the Pre-emption transmission of terminal 200 of which the OBO counter becomes a value other than 0 is disabled (or transmission is not permitted). In a case where OCW is applied, values for Pre-emption transmission (for example, values dedicated to Pre-emption) may be set to the values of OCWmin and OCWmax may.

For example, by setting the value of OCWmax for Pre-emption transmission smaller than that for other transmissions, the OBO counter is more likely to become 0, thereby increasing the opportunity for terminal 200 to transmit Pre-emption data and enabling the transmission of Pre-emption signals with lower latency.

Further, for example, by setting the value of OCWmax for Pre-emption transmission larger than that for other transmissions, the counter of OBO is less likely to become 0, and thus the opportunity for terminal 200 to transmit Pre-emption data is reduced, and interference with other terminals can be reduced.

Note that the setting value of the AID12 subfield used for the indication of Pre-emption transmission is not limited to 2008, and may be another unused AID (for example, 2009).

Alternatively, the setting value of the AID12 subfield used for the indication of Pre-emption transmission is not limited to an unused AID such as 2008, and any value from 1 to 2007 (for example, 2006) used in the existing standard may be set (or selected). In this case, AP 100 need not use, for example, the value used for the indication of Pre-emption transmission for the AID of another terminal. That is, AP 100 need not use the value used for the indication of Pre-emption transmission for the indication of non-Pre-emption transmission.

Further, the resource for Pre-emption is not limited to one, and a plurality of resources for Pre-emption may be indicated. In a case where a plurality of Pre-emption resources is indicated, the setting value of the AID12 subfield used for the indication of Pre-emption transmission may be set for each of the plurality of Pre-emption resources, for example. For example, a plurality of AIDs (for example, 2008 and 2009) may be respectively configured for the plurality of Pre-emption resources. The AID corresponding to the resource for Pre-emption may be a value that is not used or is used in the existing standard.

### <Resource Indication Example 2>

In Resource Indication Example 2, for example, each of the plurality of User Info fields in a Trigger frame may include information indicating whether the User Info field is related to Pre-emption transmission.

For example, a Reserved subfield in the User Info field of the Trigger frame may indicate, to terminal 200, whether the resource indicated by the User Info field is a resource for Pre-emption. For example, in a case where the value of the Reserved subfield is 0, the corresponding User Info field may include information on a resource for non-pre-emption, and in a case where the value of the Reserved subfield is 1, the corresponding User Info field may include information on a resource for pre-emption.

Further, in Resource Indication Example 2, the AID of the User Info field related to Pre-emption transmission may indicate a value of one AID of a plurality of terminals 200 capable of Pre-emption transmission, for example. For example, in the User Info field, the AID12 subfield may be read as a "Starting AID subfield" that includes the first AID (starting AID) among the AIDs of a plurality of terminals 200 capable of Pre-emption transmission. For example, in the RU indicated by the RU Allocation subfield in the User Info field, the transmission of Pre-emption to terminal 200 with an AID in the range of Starting AID to Starting AID + X may be permitted. For example, in a case where the value of the Reserved subfield in the User Info field is 1, the AID indicated by the AID12 subfield is 10, and X = 5, terminal 200 in the range of AID=10 to 15 is capable of Pre-emption transmission.

Note that X may be a value defined in the specification, or may be indicated to terminal 200 by a control signal such as a Trigger frame or a beacon. For example, AP 100 may indicate, to terminal 200, the number of STAs that can perform Pre-emption transmission (corresponding to a value of X+1) by including the number in a control signal such as a Trigger frame or a beacon. Further, AP 100 may determine the Exponential value of the number of STAs (for example, Y) such that X = 2^{Y} - 1, for example, and may indicate the value to terminal 200 by including the value in the control signal. Further, the AID12 subfield is not limited to including Starting AID, and may include at least one AID (for example, the last AID) of a plurality of terminals 200 for which Pre-emption transmission is permitted. The method is not limited as long as a plurality of terminals 200 for which Pre-emption transmission is permitted can be identified based on the value of the AID12 subfield.

As described above, in Resource Indication Example 2, a plurality of terminals 200 for which Pre-emption transmission is permitted is collectively indicated using the Reserved subfield and the AID12 subfield of the User Info field. In Resource Indication Example 2, indicating the resource for Pre-emption to specific terminal 200 can reduce the collision of resources between terminals 200 compared to Resource Indication Example 1 (for example, indication to all terminals 200).

Further, in Resource Indication Example 2, the same resource allocation or OCW as in the random access may be applied, similarly to Resource Indication Example 1.

Further, the subfield that indicates whether the resource is for Pre-emption (the subfield that indicates that the resource is for Pre-emption) is not limited to the Reserved subfield in the User Info field, and may be another field in the User Info field.

### <Resource Indication Example 3>

In Resource Indication Example 3, similarly to Resource Indication Example 2, each of the plurality of User Info fields in a Trigger frame may include information indicating whether the User Info field is related to Pre-emption transmission.. For example, a Reserved subfield in the User Info field of the Trigger frame may indicate, to terminal 200, whether the resource indicated by the User Info field is a resource for Pre-emption. For example, in a case where the value of the Reserved subfield is 0, the corresponding User Info field may include information on a resource for non-pre-emption, and in a case where the value of the Reserved subfield is 1, the corresponding User Info field may include information on a resource for pre-emption.

Further, in Resource Indication Example 3, the AID of the User Info field related to Pre-emption transmission may indicate, for example, the value of the AID of one terminal 200 capable of Pre-emption transmission. For example, the Pre-emption transmission to terminal 200 indicated by the AID12 subfield in the User info field may be permitted, and the Pre-emption transmission to terminal 200 not indicated by the AID12 subfield in the User info field may not be permitted.

Note that the subfield that indicates whether the resource is for Pre-emption (the subfield that indicates that the resource is for Pre-emption) is not limited to the Reserved subfield in the User Info field, and may be another field in the User Info field.

As described in Resource Indication Example 3, configuring (for example, limiting) the number of terminals 200 that are permitted Pre-emption transmission to one can reduce the resource collision between terminals 200, for example, compared to Resource Indication Example 2 (or Resource Indication Example 1).

Further, the configuration may be such that terminal 200 transmits, to AP 100 in advance, information regarding the possibility of data transmission by Pre-emption, for example, the possibility of occurrence of emergency data in the near future. Terminal 200 may transmit information on the possibility of data transmission by Pre-emption, for example, by including the information in a Buffer Status Report (BSR) or a null data packet (NDP) Feedback Report Poll (NFRP). AP 100 may determine terminal 200 that is permitted Pre-emption transmission based on the information from terminal 200, for example. AP 100 can determine, for example, whether emergency data is likely to occur on terminal 200 side in the future, so that AP 100 can efficiently allocate an AID for Pre-emption and improve the resource utilization efficiency.

The above describes an example of indication of a resource available for Pre-emption transmission.

As described above, in transmission indication method 1 for Pre-emption, terminal 200 capable of Pre-emption transmission is configured (for example, limited) using the AID12 subfield in the User Info field. Here, in Resource Indication Example 1 or Resource Indication Example 2, in a case where there are multiple terminals 200 that perform Pre-emption transmission, signals between the terminals possibly collide with each other. Further, when a certain terminal 200 performs Pre-emption transmission, interference with signals from terminals that are not performing Pre-emption transmission (performing non-Pre-emption) is possibly caused.

Accordingly, a method will be described by which the probability of signal collision between terminals 200 that perform Pre-emption transmission and the interference with other terminals are reduced by indicating, to terminal 200 by a Trigger frame, a condition (transmission condition) of whether Pre-emption transmission is permitted for terminal 200, for example.

Hereinafter, transmission conditions 1 to 3 for Pre-emption will be described.

Note that at least some of the transmission conditions described later may be defined in a specification or may be indicated to terminal 200 by another control signal such as a beacon, instead of being indicated to terminal 200 by a Trigger frame. Further, at least two of transmission conditions 1 to 3 may be combined and applied.

### <Transmission Condition 1>

In transmission condition 1, a Traffic Identifier (TID) indicating a traffic type configures whether Pre-emption transmission can be performed by terminal 200 (or limits Pre-emption transmission).

For example, AP 100 may indicate, to terminal 200, a TID (for example, a TID threshold) that permits Pre-emption transmission by a Trigger frame. For example, the Pre-emption transmission may be permitted for data with a TID equal to or higher than the TID (for example, any of 0 to 7) specified by the Trigger frame.

Here, for example, the TID is related to the allowable delay amount, and the larger the value of TID is, the smaller the allowable delay amount may be (for example, low delay may be required). Thus, specifying the TID by the Trigger frame allows terminal 200 to perform Pre-emption transmission of data on which demand for low latency is higher. The Pre-emption transmission of data on which demand for low latency is lower is less likely to be performed by the transmission condition based on the TID, thereby reducing signal collision and interference between terminals 200 and enabling efficient transmission of data with urgency.

For example, in a case where TID=4 (threshold) is indicated by the Trigger frame, terminal 200 can perform Pre-emption transmission of data with TID=4 or more (for example, TID=4, 5, 6, 7), and cannot perform Pre-emption transmission of data with TID less than 4 (for example, TID=0, 1, 2, 3).

Note that, whether Pre-emption transmission can be performed is not limited to being indicated based on the threshold of TID, and the value of TID may be separately indicated in a bitmap format, for example. For example, in a case of a bitmap TIDbitmap = {0, 0, 0, 0, 1, 1, 1, 1} respectively corresponding to values of TIDs (for example, eight values of TIDs = 0 to 7), terminal 200 can perform Pre-emption transmission of data with TID = 4, 5, 6, 7, and cannot perform Pre-emption transmission of data with TID = 0, 1, 2, 3.

Further, the indication of the transmission permission in the bitmap format is not limited to be performed by indicating the values of all TIDs, and may be performed by indicating the values of some TIDs, for example. For example, the TIDbitmap may be 4 bits instead of 8 bits, and Pre-emption transmission/not transmission of data of TIDs = 4, 5, 6, and 7 may be indicated This makes it possible to reduce the number of bits of the control information.

Further, the value indicating whether Pre-emption transmission can be performed is not limited to TID and may be another value. For example, whether Pre-emption transmission can be performed may be indicated (or notified) by information related to an allowable delay amount (for example, Access Category (AC), or control information to which an ID is assigned for each allowable delay amount), similarly to TID.

Further, the value (threshold) of TID for which Pre-emption transmission is permitted is not limited to TID=4, and may be another value. Further, the size of bitmap TIDbitmap is not limited to 4 bits or 8 bits, and may be another value.

### <Transmission Condition 2>

In transmission condition 2, whether Pre-emption transmission can be performed by terminal 200 is configured (or Pre-emption transmission is limited) depending on the time length (or signal length), that is, the time length of the Preamble and the data (for example, LENGTH of the PPDU), of the signal to be transmitted by Pre-emption,

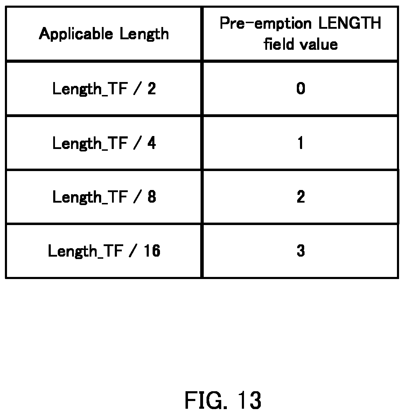

FIG. 13 illustrates an example of indication of the LENGTH of a PPDU in which Pre-emption transmission can be performed. AP 100 may configure, in the Trigger frame, a field (Pre-emption LENGTH field) for indicating a value related to a length of a signal for which Pre-emption transmission is permitted, for example. In FIG. 13, the term "LENGTH_TF" corresponds to the UL LENGTH indicated in the Common Info field of the Trigger frame.

In the example illustrated in FIG. 13, the time length of the PPDU in which Pre-emption transmission can be performed is set (or limited) to 1/2, 1/4, 1/8, or 1/16 of the UL LENGTH. Terminal 200 can perform Pre-emption transmission of data with a time length equal to or less than the time length corresponding to the value (any of 0 to 3) indicated in the Pre-emption LENGTH field, for example, and does not transmit Pre-emption data with a time length longer than the time length corresponding to the value indicated in the Pre-emption LENGTH field.

As described above, the upper limit of the time length in which transmission is permitted in Pre-emption transmission is configured (for example, limited) by the transmission condition based on the time length of the Pre-emption signal, thereby reducing interference with other terminals due to Pre-emption transmission from terminal 200.

Note that, the LENGTH of the Pre-emption to be indicated is not limited to be based on UL LENGTH (Length_TF) indicated in the Common Info field of the Trigger frame as illustrated in FIG. 13, and may be based on a value indicating the transmission time in the same manner as UL LENGTH.

Further, the range (or candidate) of time in which the LENGTH of Pre-emption can be indicated may be reduced, and the number of bits used for the indication of the LENGTH of Pre-emption may be reduced. For example, indicating a part (for example, two candidates) of the four candidates for the LENGTH of Pre-emption illustrated in FIG. 13 can reduce the number of bits used for the indication to one bit. Note that the time length to be indicated may be a shorter time length, a longer time length, or any time length.

Further, the value of UL LENGTH indicated in the Common Info field is configured in the LENGTH field of the L-SIG included in the Preamble of the TB PPDU, but the present disclosure is not limited thereto, and the value of LENGTH indicated by transmission condition 2 may be configured.

Further, the configuration may be such that Pre-emption transmission is permitted in a time length within the time length of the LENGTH of Pre-emption indicated in transmission condition 2.

### <Transmission Condition 3>

In transmission condition 3, whether Pre-emption transmission by terminal 200 can be performed is configured (or Pre-emption transmission is limited) depending on the timing of signal transmission by Pre-emption.

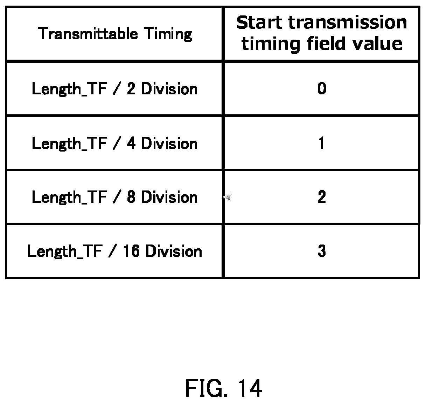

FIG. 14 illustrates an example of indication of the timing of Pre-emption transmission. AP 100 may configure, in a Trigger frame, a field (Start transmission timing field) for indicating a value related to a timing at which Pre-emption transmission can be performed, for example. In FIG. 14, the term "LENGTH_TF" corresponds to the UL LENGTH indicated in the Common Info field of the Trigger frame. AP 100 may indicate a format of a UL response signal (for example, TB PPDU of STA 1 in FIG. 8) to a Trigger frame in relation to the timing at which Pre-emption transmission can be performed. For example, AP 100 may indicate a time domain A-PPDU (Aggregated PPDU) as a TB PPDU, and the preamble timing of each PPDU constituting the A-PPDU may be a timing at which Pre-emption transmission can be performed.

In the example illustrated in FIG. 14, the timing at which Pre-emption transmission can be performed is set (or limited) to the boundaries at 1/2, 1/4, 1/8, and 1/16 of the UL LENGTH. Terminal 200 can perform Pre-emption transmission at a transmission timing corresponding to a value (any of 0 to 3) indicated in the Start transmission timing field, for example, and does not transmit Pre-emption data at a timing different from the transmission timing corresponding to the value indicated in the Start transmission timing field.

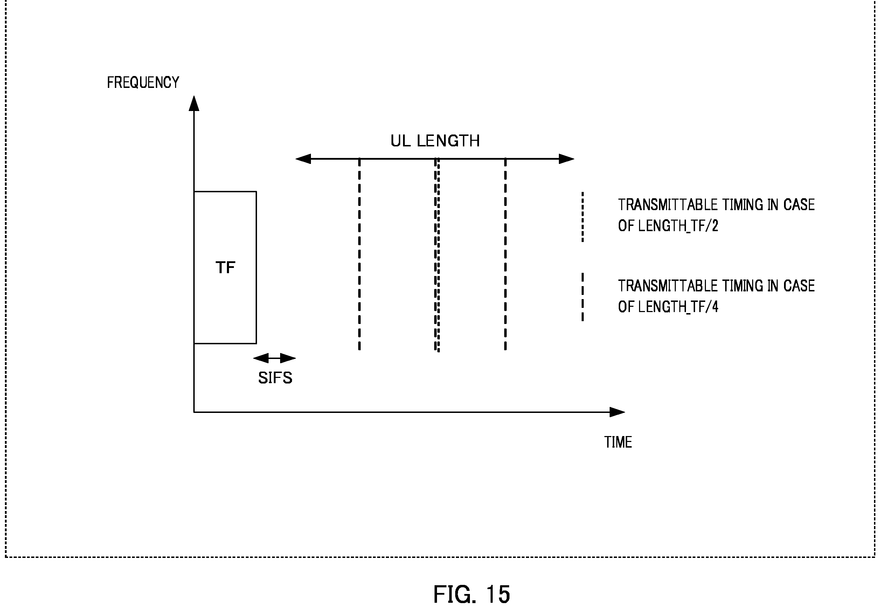

FIG. 15 illustrates exemplary timings at which Pre-emption transmission can be performed. FIG. 15 illustrates, as an example, the timing of 1/2 division of the UL LENGTH and the timings of 1/4 division of the UL LENGTH. As illustrated in FIG. 15, in a case where the timing of the 1/2 division of the UL LENGTH is indicated, terminal 200 can start the Pre-emption transmission at the central timing (one timing) of the UL LENGTH. Further, as illustrated in FIG. 15, in a case where the timing of the 1/4 division of the UL LENGTH is indicated, terminal 200 can start the Pre-emption transmission at any of the three timings within the time corresponding to the UL LENGTH.

As described above, in transmission condition 3, similarly to transmission condition 2, the signal length for Pre-emption in the interval of the UL LENGTH is limited by the transmission condition based on the transmission timing of Pre-emption transmission, and thus, interference with other terminals can be reduced.

Further, in transmission condition 3, AP 100 may perform the Pre-emption reception processing (Preamble detection processing) at the start timing of the Pre-emption transmission. That is, AP 100 does not need to perform the Pre-emption reception processing at a timing different from the start timing of the Pre-emption transmission. Thus, the processing load of AP 100 can be reduced.

Further, in a case where the resource for Pre-emption is indicated using a plurality of AIDs (for example, a plurality of User Info fields), an individual transmission timing may be set for each AID. Thus, for example, shifting the transmission timing for each AID can reduce the collision of Pre-emption transmission.

The transmission conditions 1 to 3 for Pre-emption have been described above.

Next, an example of a format in a case where information on the transmission condition for the Pre-emption described above is indicated in the User Info field of the Trigger frame illustrated in FIG. 3 or in the Special User Info field illustrated in FIG. 4 will be described.

For example, the field in the User Info field described later may not necessarily be used in Pre-emption transmission. Thus, the transmission condition can be indicated while an increase in the overhead of the control information is suppressed, by replacing all or some of the fields described below with a field indicating information on the transmission condition (for example, a field of TID threshold, Pre-emption LENGTH, or Start transmission timing).

### <Field Example 1>

The transmission condition may be indicated in a field indicating an MCS of data to be uplink-transmitted in the User Info field. For example, the transmission condition may be indicated in the "UL EHT-MCS subfield" of the User Info field illustrated in FIG. 3.

For example, since the urgency of Pre-emption transmission is assumed to be high, transmission using a low MCS may be assumed for transmission without errors. Thus, for example, in Pre-emption transmission, the MCS may be configured to a fixed value (for example, the lowest MCS), and the MCS need not be indicated in the UL EHT-MCS subfield (for example, the indication of the MCS is not necessary). Thus, the transmission condition can be indicated while an increase in the overhead of the control information is suppressed, by replacing the UL EHT-MCS subfield with a field indicating information on the transmission condition.

Note that the value of the MCS for Pre-emption transmission (a fixed value) may be defined in the specification or may be indicated to terminal 200 by another control information such as a beacon. Further, the value of the MCS is not limited to the lowest MCS, and may be another value.

Further, the present disclosure is not limited to a case where all of the UL EHT-MCS subfield (for example, 4 bits) are replaced with a field for indicating the transmission condition, and some bits (for example, 2 bits (for example, any of MCS = 0, 1, 2, and 3)) may be used for indicating the MCS, and the remaining bits (for example, 2 bits) may be used for a field indicating the transmission condition. Note that the number of bits as some bits described above is not limited to two bits, and may be any other number of bits.

Note that the field name "UL EHT-MCS subfield" is merely an example and may be different. For example, the UL EHT-MCS subfield may be renamed to UL EHTplus-MCS in EHTplus, and thus the field name is not limited thereto as long as the field is for indicating MCS.

### <Field Example 2>

The transmission condition may be indicated in a field indicating a spatial stream (SS) in the User Info field. For example, the transmission condition may be indicated in the "SS Allocation/RA-RU Information subfield" of the User Info field illustrated in FIG. 3.

For example, since the urgency of Pre-emption transmission is assumed to be high, single-stream transmission may be assumed for transmission without errors. Thus, for example, in Pre-emption transmission, the number of streams need not be indicated in the SS Allocation subfield (for example, indication of the stream is not necessary) by configuring the transmission stream to a fixed value (for example, 1). Thus, the transmission condition can be indicated while an increase in the overhead of the control information is suppressed, by replacing the SS Allocation subfield with a field indicating information on the transmission condition.

Note that, in a case where the resource is indicated using the RA-RU Information subfield in Resource Indication Examples 1 and 2 described above, this field is used, and thus, the transmission condition may be indicated using a field different from this field.

### <Field Example 3>

The transmission condition may be indicated in a field indicating a value related to transmission power of the uplink (or reception power of a signal in AP 100 (for example, an expected value or a target value)) in the User Info field. For example, the transmission condition may be indicated in the "UL Target Received Power subfield" of the User Info field illustrated in FIG. 3.

For example, since the urgency of Pre-emption transmission is assumed to be high, the transmission power may be assumed to be set to a high value (for example, maximum power) for transmission without errors. Thus, for example, in Pre-emption transmission, terminal 200 may configure the maximum applicable power, and the transmission power need not be indicated in the UL Target Received Power subfield (for example, the indication of the transmission power is not necessary). Thus, the transmission condition can be indicated while an increase in the overhead of the control information is suppressed, by replacing the UL Target Received Power subfield with a field indicating information on the transmission condition.

Note that the transmission power configured in Pre-emption transmission is not limited to the maximum power.

### <Field Example 4>

The transmission condition may be indicated in the "Reserved subfield" of the Special User info field illustrated in FIG. 4. Since the Reserved subfield is not used in the existing standard, the subfield may be used for another purpose (for example, indication of a transmission condition).

### <Field Example 5>

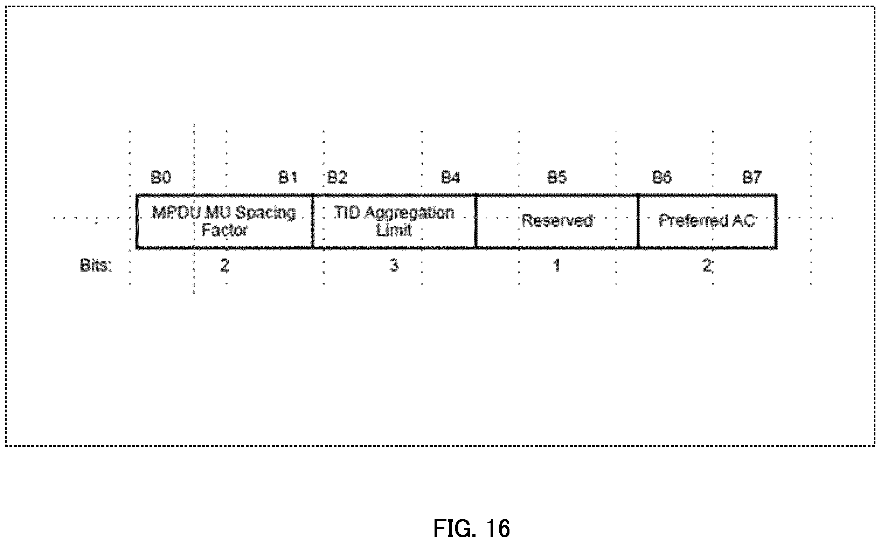

For example, in a case where the Trigger frame type is "basic," the transmission condition may be indicated in the Trigger Dependent User Info field illustrated in FIG. 16.

For example, data for Pre-emption transmission (for example, emergency data) is likely to have a small data size, and thus, an Aggregate MAC protocol data unit (A-MPDU) is less likely to be applied. Thus, in a case where the Trigger frame type is "basic," the MPDU MU Spacing Factor subfield is not used, and thus, the subfield may be replaced with a field indicating information on the transmission condition.

Further, for example, since the data for Pre-emption transmission is likely to be data of a single TID, the TID Aggregation Limit subfield is likely not to be used. Thus, in a case where the Trigger frame type is "basic," the TID Aggregation Limit subfield may be replaced with a field indicating information on the transmission condition.

Further, for example, in a case where TID for which transmission can be performed is indicated as a transmission condition (for example, transmission condition 1), the Preferred AC subfield need not be used. Thus, in this case, the Preferred AC subfield may be replaced with a field indicating information on the transmission condition.

Further, the transmission condition may be indicated in the "Reserved subfield" of the Trigger Dependent User Info field illustrated in FIG. 16. Since the Reserved subfield is not used in the existing standard, the subfield may be used for another purpose (for example, indication of a transmission condition).

For example, the transmission condition may be indicated using all or some of the subfields of the Trigger Dependent User Info field illustrated in FIG. 16.

The above describes an example of a field indicating information on a transmission condition for Pre-emption. Note that the field indicating information on the transmission condition for Pre-emption is not limited to the example described above, and may be another field. For example, a field indicating information on the transmission condition for Pre-emption may be another field all or a part of which is not used in Pre-emption transmission.

Next, an example of a format in a case where all or a part of the transmission conditions are transmitted in the fields described above will be described.

### <Format Example 1>

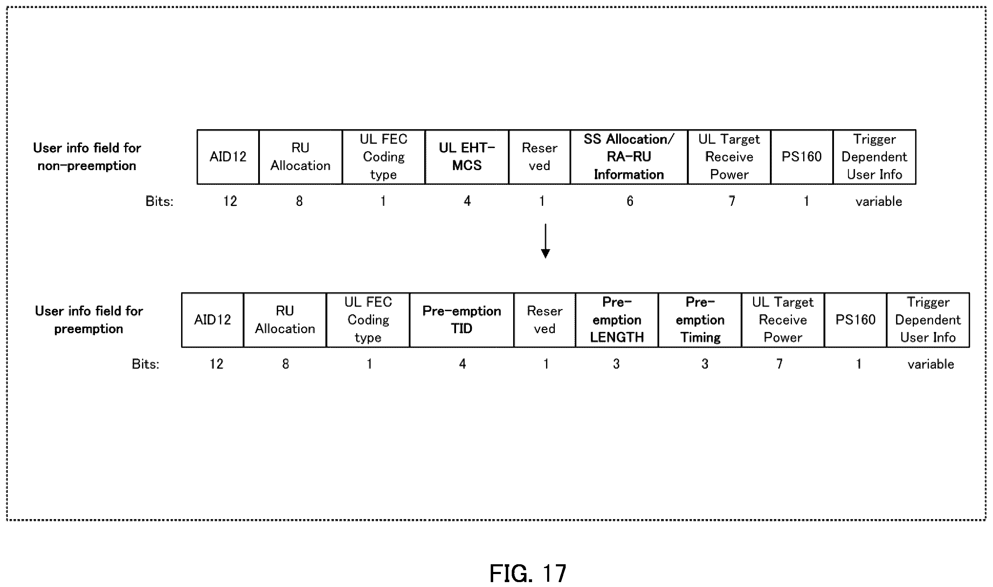

In the format example illustrated in FIG. 17, transmission condition 1 (for example, Pre-emption TID), transmission condition 2 (for example, Pre-emption LENGTH), and transmission condition 3 (Pre-emption Timing) are indicated in the "UL EHT-MCS subfield" and the "SS Allocation/RA-RU Information subfield" in the User Info field of the Trigger frame.

### <Format Example 2>

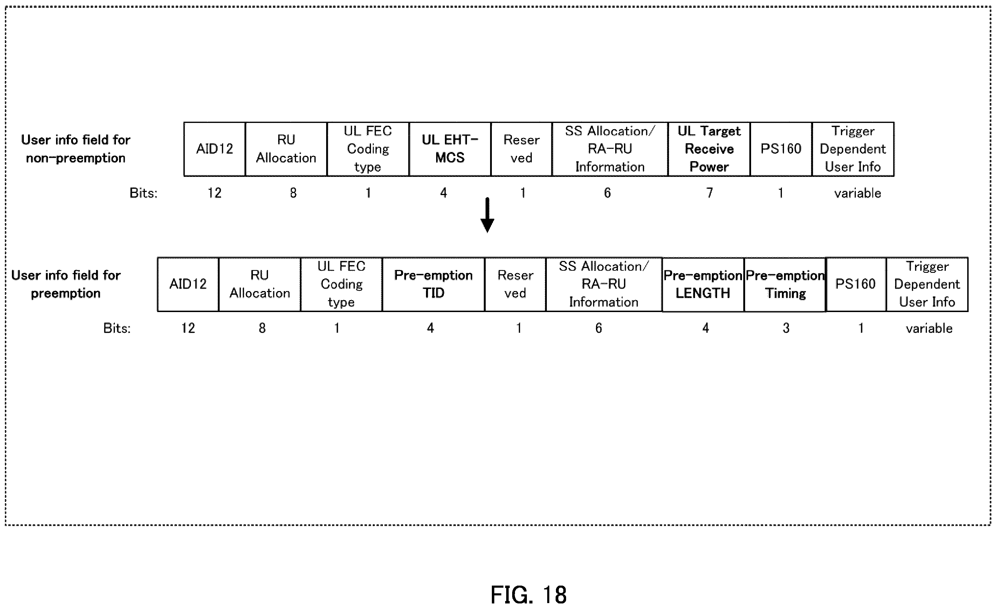

In the format example illustrated in FIG. 18, transmission condition 1 (for example, Pre-emption TID), transmission condition 2 (for example, Pre-emption LENGTH), and transmission condition 3 (for example, Pre-emption Timing) are indicated in the "UL EHT-MCS subfield" and the "UL Target Received Power subfield" in the User Info field of the Trigger frame.

### <Format Example 3>

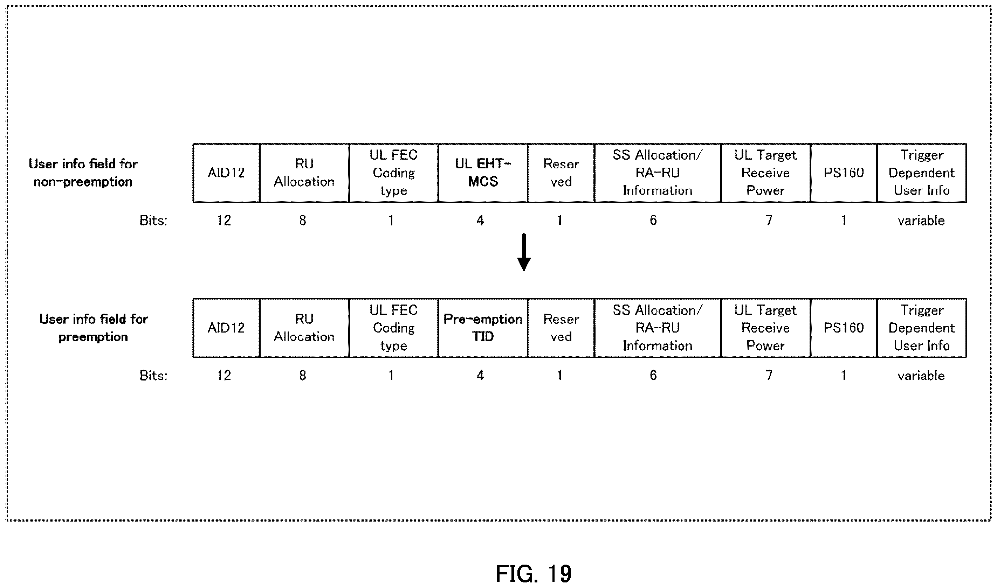

In the format example illustrated in FIG. 19, transmission condition 1 (for example, Pre-emption TID) is indicated in the "UL EHT-MCS subfield" in the User Info field of the Trigger frame.

Note that the formats illustrated in FIGS. 17, 18, and 19 are merely examples, and at least one of the fields used for the indication of the transmission conditions, the correspondence between transmission conditions 1 to 3 and the fields, and the number of bits used for the indication of the transmission conditions may differ from those in FIGS. 17, 18, and 19. Further, at least one of transmission conditions 1 to 3 may be applied, or a plurality of transmission conditions may be applied. Further, among the plurality of transmission conditions, some of the transmission conditions may be indicated to terminal 200 by the Trigger frame, and the remaining transmission conditions may be defined in a specification, or may be indicated to terminal 200 by another control information.

Transmission indication method 1 for Pre-emption has been described above.

### [Transmission Indication Method 2]

In transmission indication method 2, control information on a resource used for Pre-emption transmission (for example, whether Pre-emption transmission can be performed) may be included in a Common Info field of a Trigger frame.

For example, AP 100 may indicate, to terminal 200, whether Pre-emption transmission can be performed by the Common Info field of the Trigger frame. Terminal 200 may perform Pre-emption transmission in accordance with the indication regarding whether Pre-emption transmission can be performed indicated by the Common Info field of the Trigger frame.

For example, at least some of the "Reserved subfields" (for example, B22, B25, B53, B63) or a part of the "EHT Reserved subfield" (for example, B56-B62) in the Common Info field illustrated in FIG. 2 may be read as a "Pre-emption enable subfield."

For example, in a case where 0 is set in the Pre-emption enable subfield, it may be indicated that Pre-emption transmission is not possible in a band in which the Trigger frame is transmitted and a time (for example, UL LENGTH) indicated by the Trigger frame. Further, for example, in a case where 1 is set in the Pre-emption enable subfield, it may be indicated that Pre-emption transmission is possible in the band in which the Trigger frame is transmitted and the time indicated by the Trigger frame.

Note that the format of the PPDU used in the Pre-emption transmission may be a TB-PPDU or an MU PPDU.

Further, the resource (for example, the position of the RU) for transmitting the data of Pre-emption may be any RU in the band in which the Trigger frame is transmitted, for example.

Further, the configuration values such as MCS and Target Received Power indicated in the User Info field may be any values, and terminal 200 may freely determine the MCS and the transmission power. Note that the configuration values such as MCS and Target Received Power are not limited to any values, and may be defined as fixed values in a specification, or may be indicated to terminal 200 by another control information such as a beacon.

As described above, in transmission indication method 2 for Pre-emption, the Pre-emption transmission by terminal 200 is enabled by the indication of whether Pre-emption can be performed using the Common Info field of the Trigger frame, and for example, a delay in transmitting emergency data can be reduced.

Note that, in the AID12 subfield of the User Info field, a configuration may be employed in which an AID (for example, AID = 2008) that is not used in the existing standard is used to indicate a parameter such as an MCS or Target Received Power used for Pre-emption transmission. Further, in transmission indication method 2, the transmission condition for Pre-emption may be indicated in the User Info field in the same manner as in transmission indication method 1.

The transmission instruction method for Pre-emption has been described above.

As described above, in the present embodiment, AP 100 transmits, to terminal 200 by a Trigger frame, control information on a resource (or whether Pre-emption transmission can be performed) used for Pre-emption transmission that occurs during the transmission of a signal indicated by the Trigger frame. Terminal 200 controls transmission of a Pre-emption signal based on the control information included in the Trigger frame.

Thus, for example, terminal 200 can override and transmit data (for example, emergency data) while another terminal is transmitting a signal, based on the control information indicated by the Trigger frame. Thus, according to the present embodiment, delays can be reduced even in a case where Pre-emption transmission occurs, and thus the efficiency of signal transmission control in radio communication can be enhanced.

### (Embodiment 2)

In the uplink signal (for example, TB-PPDU) transmitted by the indication from the Trigger frame, the L-STF/L-LTF/L-SIG/RL-SIG/LT-SIG (for example, signals of pre-EHT modulated field) are transmitted in a 20 MHz band even when a resource of 20 MHz band or less is allocated, for example.

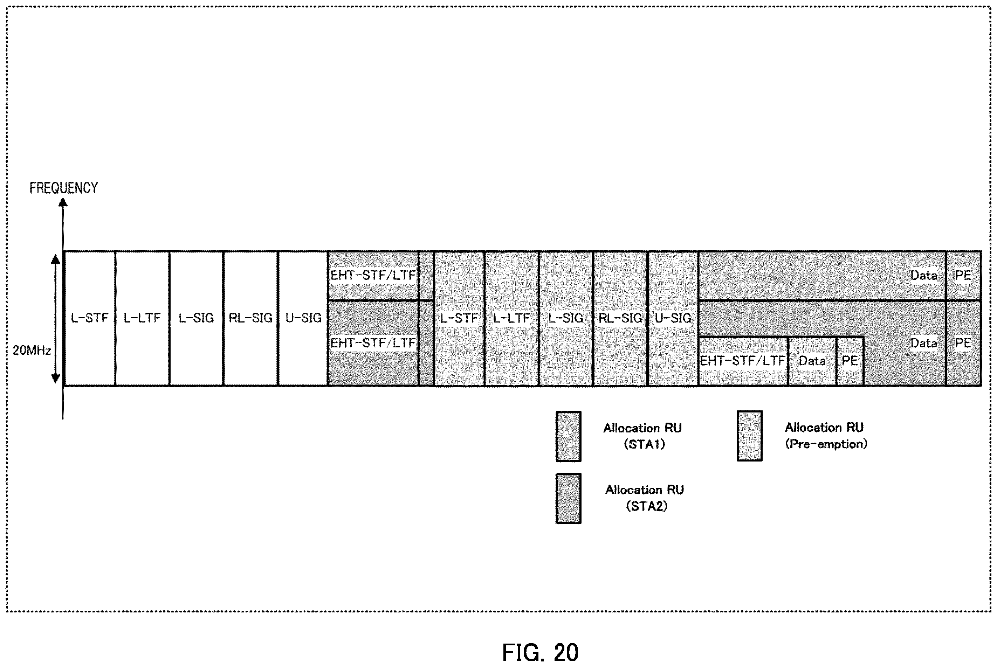

FIG. 20 illustrates an example of Pre-emption. As illustrated in FIG. 20, in a case where the resource allocated to Pre-emption is smaller than the 20 MHz band, the signals of the EHT-STF/LTF, Data, and PE fields (for example, signals of the EHT modulated field) among the signals to be Pre-emption transmitted are transmitted in the band allocated to Pre-emption. Meanwhile, as illustrated in FIG. 20, the signals of the L-STF/L-LTF/L-SIG/RL-SIG/U-SIG field (for example, the signals of the pre-EHT modulated field) among the signals to be Pre-emption transmitted are transmitted in a 20 MHz band.

In this case, in FIG. 20, the signal of the EHT-STF/LTF, Data, and PE fields to be Pre-emption transmitted (for example, the signals of the EHT modulated field) possibly interfere with the signal of STA2, but does not interfere with the signal of STA1. Meanwhile, the L-STF/L-LTF/L-SIG/RL-SIG/U-SIG (for example, signals of a pre-EHT modulated field) to be Pre-emption transmitted may interfere with the signals of both STA1 and STA2.

In the present embodiment, a PPDU format in Pre-emption transmission (for example, PPDU format dedicated to Pre-emption transmission) for suppressing interference as illustrated in FIG. 20 will be described.

A radio communication system according to the present embodiment may include AP 100 and terminal 200 in the same manner as in Embodiment 1.

The configuration of AP 100 according to the present embodiment may be the same as the configuration according to Embodiment 1.

The configuration of terminal 200 according to the present embodiment may be the same as the configuration according to Embodiment 1. In terminal 200 according to the present embodiment, for example, the operation of transmission signal generator 205 may be different from that in Embodiment 1.

Transmission signal generator 205 generates a transmission signal (for example, TB-PPDU) for uplink transmission based on control information (for example, LENGTH, MCS, and the like) inputted from Trigger frame determiner 203, for example.

Further, transmission signal generator 205 generates a transmission signal (for example, TB-PPDU or MU-PPDU) for Pre-emption transmission based on control information inputted from Pre-emption transmission controller 204, for example. In the case of Pre-emption transmission, transmission signal generator 205 generates a transmission signal based on a format for Pre-emption (for example, Pre-emption TB-PPDU or Pre-emption MU PPDU). Note that examples of formats for Pre-emption (referred to as, for example, Pre-emption transmission formats) will be described later.

Transmission signal generator 205 performs error correction encoding and modulation processing on the generated transmission signal, and outputs the modulated data signal to radio transceiver 201. Note that, in a case where the modulation signal is an OFDM signal, terminal 200 (for example, transmission signal generator 205) may form the OFDM signal by performing IFFT/IDFT processing after mapping the modulation signal to the frequency resource, and adding a CP.

An example of a PPDU format for Pre-emption transmission will be described.

The format of the PPDU used in Pre-emption transmission may be different from the format of the existing PPDU (for example, TB PPDU or MU PPDU). For example, the PPDU used in Pre-emption transmission may be configured by deleting the portion from L-STF to EHT-LTF of the existing PPDU (for example, the portion before Data) and adding a new LTF (for example, "Pre-emption LTF") used for packet supplementation, level grasping, channel estimation, and the like.

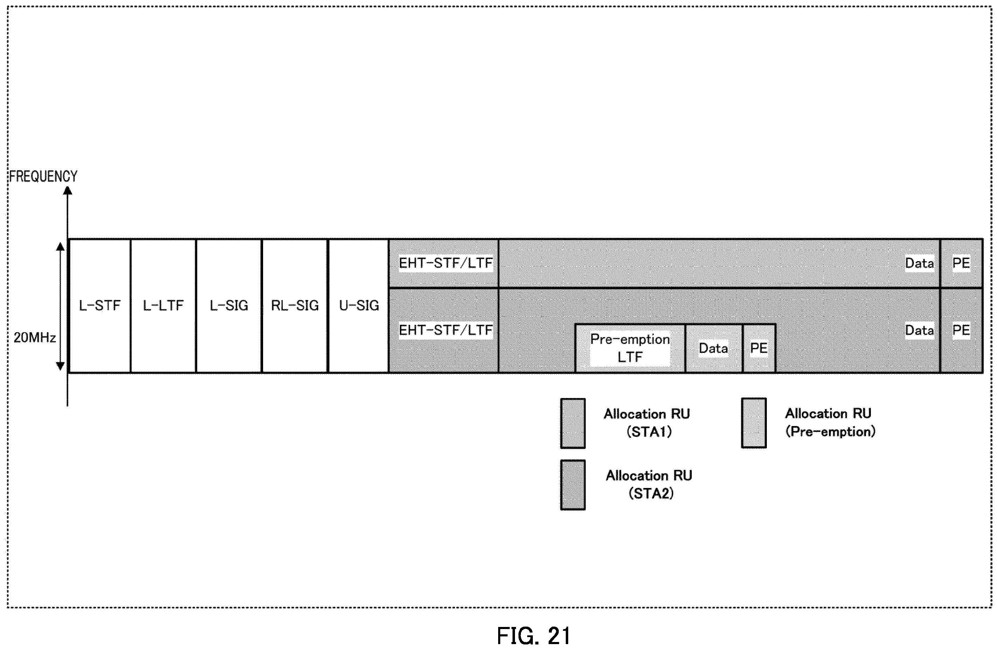

Further, the Pre-emption LTF (or preamble) may be allocated to an allocation resource (for example, RU) for the Pre-emption signal indicated by the Trigger frame, as illustrated in FIG. 21, and may be transmitted.

In the example illustrated in FIG. 21, when the resource allocated for Pre-emption is smaller than a 20 MHz band, the Pre-emption LTF and data are transmitted in the band allocated for Pre-emption. Thus, in FIG. 21, the signal of the Pre-emption transmission (Pre-emption LTF and data) may interfere with the signal of STA 2, but does not interfere with the signal of STA 1.

As described above, the application of the PPDU format for Pre-emption transmission can suppress the interference caused by Pre-emption transmission to a terminal transmitting another TB-PPDU. Alternatively, another terminal stopping the transmission due to Pre-emption transmission can be avoided.

Further, introducing the Pre-emption LTF can shorten the Preamble length in the Pre-emption transmission, thereby reducing the interference caused to a terminal transmitting another TB-PPDU.

Note that the configuration of the Pre-emption LTF may be a format including EHT-LTF and EHT-STF, or a format including EHT-LTF. Further, in the case of applying EHT-LTF to Pre-emption LTF, the number of symbols may be fixed to one symbol. For example, the number of symbols for EHT-LTF may be fixed to one symbol because Pre-emption transmission possibly supports a single stream and does not support a multi-stream.

### (Embodiment 3)

For example, in a case where Pre-emption transmission of a terminal is permitted, the AP prepares hardware for receiving a normal (or non-Pre-emption) TB-PPDU (for example, hardware for Preamble detection processing) and hardware for receiving a Pre-emption-transmitted signal separately, and receives the normal TB-PPDU and the data of the Pre-emption transmission separately. For this reason, the scale of the hardware of the AP possibly increases.

In the present embodiment, a method for reducing the scale of AP hardware by, for example, configuring (or limiting) the timing of Pre-emption transmission will be described.

A radio communication system according to the present embodiment may include AP 100 and terminal 200 in the same manner as in Embodiment 1.

The configuration of AP 100 according to the present embodiment may be the same as the configuration according to Embodiment 1.

The configuration of terminal 200 according to the present embodiment may be the same as the configuration according to Embodiment 1. In terminal 200 according to the present embodiment, for example, the operation of Pre-emption transmission controller 204 may be different from that in Embodiment 1.

Pre-emption transmission controller 204 controls transmission of data (for example, emergency data) for Pre-emption transmission in the time of LENGTH indicated in the Trigger frame, based on the resource information for Pre-emption included in the information on Pre-emption inputted from Trigger frame determiner 203, for example.

Further, in a case where the Trigger frame includes the transmission condition described in Embodiment 1 (for example, transmittable TID, LENGTH, transmission timing, and the like), Pre-emption transmission controller 204 may control the Pre-emption transmission according to the transmission condition, for example.

Further, Pre-emption transmission controller 204 configures (for example, limits) the Pre-emption transmission timing, for example. For example, Pre-emption transmission controller 204 may configure the timing of transmitting a Pre-emption signal based on the timing of transmitting the TB-PPDU indicated by the Trigger frame. Note that an example of a method for configuring the timing of Pre-emption transmission will be described later.

Pre-emption transmission controller 204 outputs information used for Pre-emption data transmission to transmission signal generator 205.

Next, an exemplary method for configuring the timing of Pre-emption transmission will be described. Note that the following methods for configuring the transmission timing may be combined.

### <Configuration Method 1>

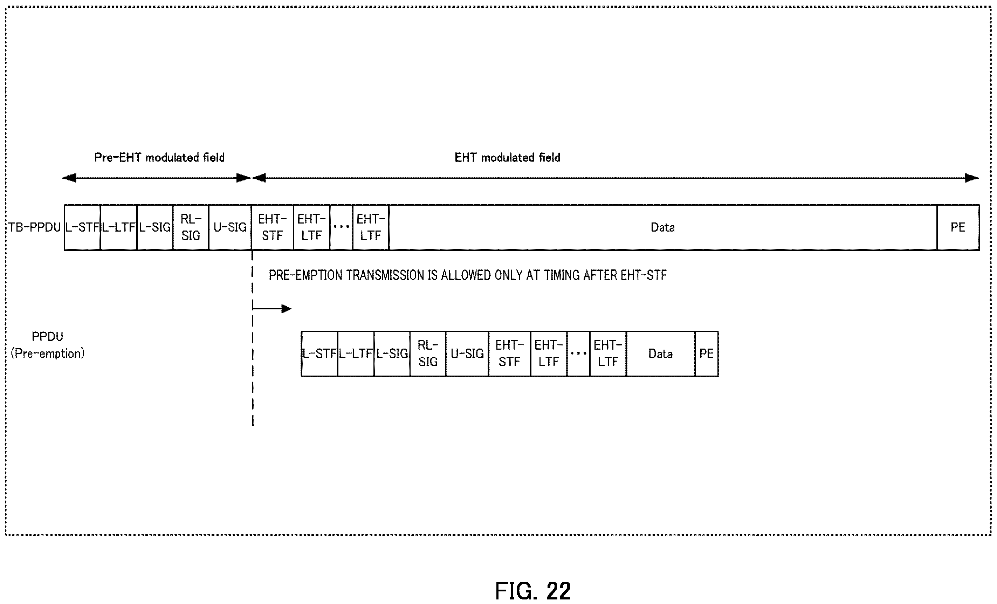

FIG. 22 illustrates an exemplary configuration of the timing of Pre-emption transmission according to Configuration Method 1.

As illustrated in FIG. 22, the Pre-emption signal may be configured to be transmittable at a timing after a U-SIG symbol of a TB-PPDU (for example, normal TB-PPDU) indicated by the Trigger frame (or after the pre-EHT modulated field), and may be configured to be non-transmittable at a timing before the U-SIG symbol. For example, the Pre-emption signal may be configured to be transmittable at a timing after a symbol (for example, an EHT-STF symbol) related to the EHT of the TB-PPDU indicated by the Trigger frame, and may be configured to be non-transmittable at a timing before the symbol related to the EHT.

Here, because the FFT/DFT size is different between the Pre-EHT modulated field and the EHT modulated field, AP 100 possibly includes different hardware configurations for performing FFT/DFT processing on the signal of each field.

At this time, as illustrated in FIG. 22, by performing Pre-emption transmission at a timing later than the U-SIG symbol of a normal TB-PPDU, AP 100 can commonize hardware for processing of receiving L-STF to U-SIG for signals of a Pre-EHT modulated field (processing of signal detection, FFT/DFT, and the like) between a TB-PPDU and a Pre-emption PPDU in a receiver configuration. In the example illustrated in FIG. 22, in AP 100, the processing of receiving L-STF to U-SIG of the Pre-emption PPDU is started at least after the processing of receiving L-STF to U-SIG of the TB-PPDU. Thus, AP 100 can perform the processing of receiving both the TB-PPDU and the Pre-emption PPDU using common hardware for reception processing supporting the Pre-EHT modulated field, for example.

Thus, according to Configuration Method 1, the scale of hardware in AP 100 can be reduced.

Note that, whether to apply the configuration (or limitation) of the timing of Pre-emption transmission may be controlled based on the Capability information of AP 100.

For example, the Capability information of AP 100 may include a flag indicating whether the timing of the Pre-emption transmission is configured (or limited to) later than the U-SIG symbol of the TB-PPDU. For example, in a case where the flag indicates 0 (for example, in a case where the timing is not limited), terminal 200 can perform Pre-emption transmission before or after the U-SIG symbol. Further, for example, in a case where the flag indicates 1 (for example, in a case where the timing is limited), terminal 200 cannot perform Pre-emption transmission before the U-SIG symbol, and can perform Pre-emption transmission after the U-SIG symbol.

Note that the timing of the Pre-emption transmission is not limited to a method based on the timing of the U-SIG symbol (or the EHT-STF symbol). For example, the timing of Pre-emption transmission may be configured (or limited) based on a timing later than the U-SIG symbol (for example, a timing after EHT-LTF) depending on the hardware processing configuration of AP 100.

### <Configuration Method 2>

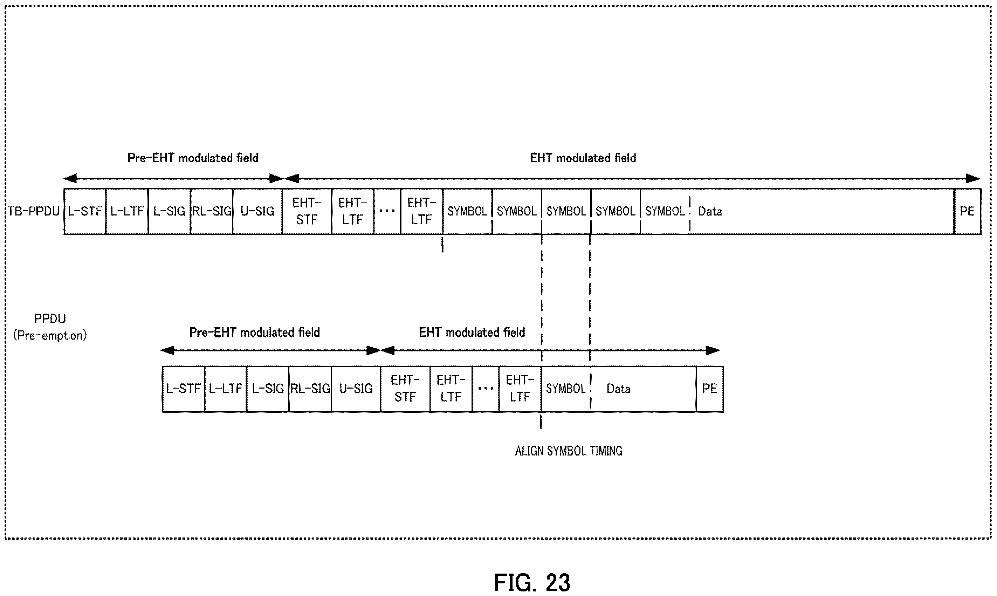

FIG. 23 illustrates an exemplary configuration of the timing of the Pre-emption transmission according to Configuration Method 2.

In Configuration Method 2, as illustrated in FIG. 23, the timing of Pre-emption transmission may be configured (or limited) such that the symbol timing (or the boundary of the OFDM symbol) of the EHT modulated field is aligned between the Pre-emption transmission and the transmission of the TB-PPDU. For example, the Pre-emption signal may be transmitted in alignment with the symbol timing of the TB-PPDU indicated by the Trigger frame.

This allows AP 100 to perform the reception processing for the symbols of the EHT modulated field of the TB-PPDU and the symbols of the EHT modulated field of the Pre-emption together, and thus, the FFT/DFT processing for the reception can be commonized in the EHT modulated field, and the scale of the hardware of AP 100 can be reduced.

Note that, whether to apply the configuration (or limitation) of the timing of Pre-emption transmission may be controlled based on the Capability information of AP 100.

For example, the Capability information of AP 100 may include a flag indicating whether the symbol timing of the EHT modulated field of the Pre-emption transmission is aligned with the symbol timing of the EHT modulated field of the TB PPDU (for example, whether the Pre-emption transmission timing is limited). For example, in a case where the flag indicates 0 (for example, in a case where the timing is not limited), terminal 200 can perform Pre-emption transmission without depending on the symbol timing of the TB-PPDU. Further, for example, in a case where the flag indicates 1 (for example, in a case where the timing is limited), terminal 200 can perform Pre-emption transmission in alignment with the symbol timing of the EHT modulated field of the TB PPDU.

The above describes an exemplary configuration of the transmission timing for Pre-emption.

Note that, in the present embodiment, a case where the PPDU format for Pre-emption is the same as the format of TB-PPDU has been described, but the PPDU format for Pre-emption is not limited thereto. For example, the PPDU format for Pre-emption may be the format for Pre-emption described in Embodiment 2. With the format for Pre-emption, AP 100 need not perform the processing of receiving the Pre-EHT modulated field in the Pre-emption reception processing. Thus, in AP 100, hardware for receiving a pre-EHT modulated field need not be necessary in the Pre-emption reception processing.

### (Variations of Embodiments 1 to 3)

(1) Among the Trigger types indicated in the Common Info field of the Trigger frame, the Pre-emption transmission may not be permitted for some Trigger types, and may be permitted for other Trigger types.
   For example, an ACK, RTS, or clear to send (CTS) controlled by a Trigger type such as multi-user block ack request (MU-BAR), multi-user request to send (MU-RTS), or group cast with retries (GCR)-MU-BAR is important information in radio control. For this reason, in a Trigger frame in which a Trigger type such as MU-BAR, MU-RTS, or GCR-MU-BAR is configured, the Pre-emption transmission need not be permitted. For example, in a Trigger frame in which a Trigger type different from MU-BAR, MU-RTS, and GCR-MU-BAR is configured, the Pre-emption transmission may be permitted.
(2) The Capability information of AP 100 (for example, performance that X dB or more is allowed from the power indicated by Target RSSI) may be indicated to terminal 200, and terminal 200 may determine whether Pre-emption transmission can be performed and the transmission power of Pre-emption based on the Capability information.

The X may be defined in the specification or may be indicated to terminal 200 by control information such as a beacon.

For example, in a case where the reception power difference between the reception power of the Pre-emption signal and the reception power of the signal of the non-Pre-emption TB-PPDU is large (for example, equal to or larger than a threshold), AP 100 may not be capable of correctly receive the signal depending on the Capability of AP 100. Accordingly, the Pre-emption transmission may be controlled based on the variation in power from the Target Received Power depending on the Capability of AP 100. This makes it possible to prevent AP 100 from being incapable of correctly decoding a Pre-emption signal due to the influence of the reception power difference between Pre-emption and non-Pre-emption.

(3) In a resource allocated for Pre-emption, a TB-PPDU for non-Pre-emption need not be transmitted. Terminal 200 that transmits a non-Pre-emption TB-PPDU can, for example, determine (or identify) the resource in which Pre-emption is transmitted by decoding another User Info field (for example, in the case of resource indication example 1, the User Info field with AID=2008) that is different from the User Info field corresponding to terminal 200.

Then, terminal 200 need not transmit data (for example, non-Pre-emption TB-PPDU) in a resource in which Pre-emption is likely to occur. This makes it possible to eliminate the interference caused by a non-Pre-emption TB-PPDU to a Pre-emption PPDU, thereby improving the reception quality of a Pre-emption signal.

Further, for example, information on whether terminal 200 that transmits a non-Pre-emption TB-PPDU is capable of transmitting data in a Pre-emption resource may be indicated to terminal 200 by a Trigger frame or a beacon (for example, 0: capable of transmission, 1: incapable of transmission).

(4) Different resources (for example, RU or stream) may be allocated to terminal 200 that performs non-Pre-emption transmission (for example, STA 1 in FIG. 8) and terminal 200 that performs Pre-emption transmission (for example, STA 2 in FIG. 8), and the signal of terminal 200 that performs Pre-emption transmission and the signals of terminal 200 that performs non-Pre-emption transmission may be multiplexed using a user multiplexing scheme (such as UL OFDMA or UL MU-MIMO).

In this case, control that permits a delay in the start timing of the Pre-emption transmission or the cancellation of the Pre-emption transmission may be applied to terminal 200 that performs the Pre-emption transmission. Since the resources of Pre-emption transmission and non-Pre-emption transmission can be made orthogonal or quasi-orthogonal, interference can be reduced.

Further, in a case where a user multiplexing scheme is used, different stream numbers may be assigned to terminal 200 that performs non-Pre-emption transmission and terminal 200 that performs Pre-emption transmission in the Trigger frame. For example, different stream numbers may be assigned to terminal 200 that performs non-Pre-emption transmission and terminal 200 that performs Pre-emption transmission in the SS Allocation subfield of the User Info field. Terminal 200 that performs Pre-emption transmission and terminal 200 that performs non-Pre-emption transmission may determine the LTF length (for example, the number of symbols of EHT-LTF) based on the total number of spatial streams, including the assignment to terminal 200 that performs non-Pre-emption transmission and the assignment to terminal 200 that performs Pre-emption transmission.

Further, in a case where the signals of terminal 200 that performs Pre-emption transmission and terminal 200 that performs non-Pre-emption transmission are multiplexed using a user multiplexing scheme, when terminal 200 receives a Trigger frame including an assignment that specifies Pre-emption, terminal 200 that performs Pre-emption transmission may transmit the preamble of a TB PPDU and hold the transmission of the data field, for example. The transmission of the preamble of the TB PPDU may be performed, for example, at the same timing as non-Pre-emption transmission, and a certain delay may be allowed compared to the non-Pre-emption transmission. AP 100 may receive the preamble part (for example, without receiving the data part), and perform channel estimation using EHT-LTF for terminal 200 that has a possibility of performing Pre-emption transmission. Terminal 200 that performs Pre-emption transmission may, for example, start transmission of the data field when data of Pre-emption transmission occurs. Thus, resources can made orthogonal or quasi-orthogonal between terminal 200 that performs Pre-emption transmission and terminal 200 that performs non-Pre-emption transmission in terms of the Preamble, thereby reducing interference.

Note that terminal 200 may, for example, retransmit all or part of the preamble prior to the transmission of the data field. Retransmitting the preamble allows AP 100 to perform timing detection of the data field.

### (Embodiment 4)

In Embodiments 1 to 3, a control method for Pre-emption of an uplink signal (for example, an uplink OFDM signal) controlled by a Trigger frame has been described, but in the present embodiment, a control method for Pre-emption of a downlink signal (for example, a downlink OFDM signal) will be described.

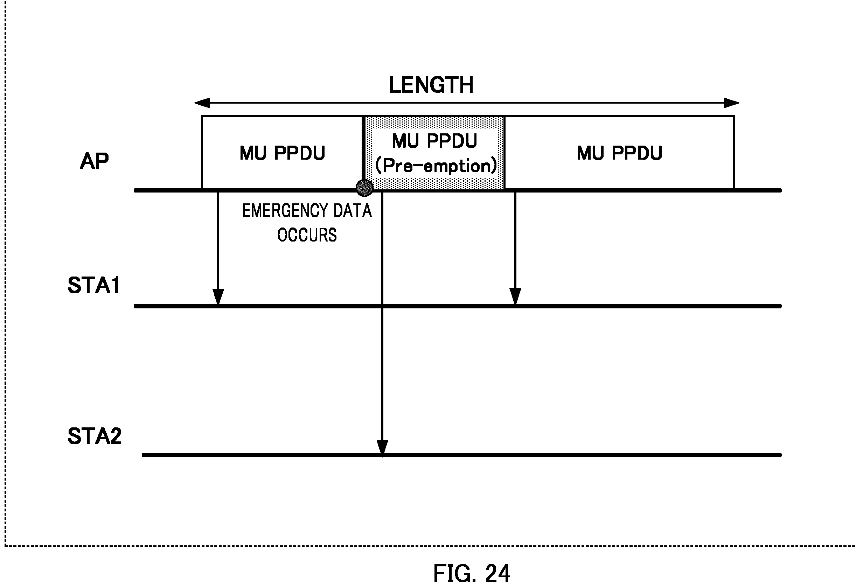

FIG. 24 illustrates an example of Pre-emption transmission in the downlink. In the example illustrated in FIG. 24, downlink data of Pre-emption (for example, emergency data) occurs while AP is transmitting downlink data (for example, MU PPDU) for STA 1. In this case, as illustrated in FIG. 24, AP may override the data for Pre-emption addressed to a different STA(for example, STA2) on the downlink PPDU for STA 1 and transmit the data. Note that the present disclosure is not limited to the example illustrated in FIG. 24, and AP may perform Pre-emption transmission in a part of the transmission band of the downlink PPDU of STA1.

In FIG. 24, when STA 1 does not recognize that Pre-emption transmission is performed by AP (for example, some of the transmission signals for STA 1 are not transmitted), STA 1 performs reception processing (for example, decoding processing) using all data (for example, including Pre-emption data) received within the LENGTH of the downlink PPDU for STA 1, the reception performance is possibly degraded.

In the present embodiment, for example, the AP may indicate, to the terminal, that Pre-emption has occurred in the downlink (for example, that some of signals for non-Pre-emption transmission are not transmitted). Thus, the terminal can improve the reception performance by not applying the signal in the section where Pre-emption has occurred to the decoding processing.

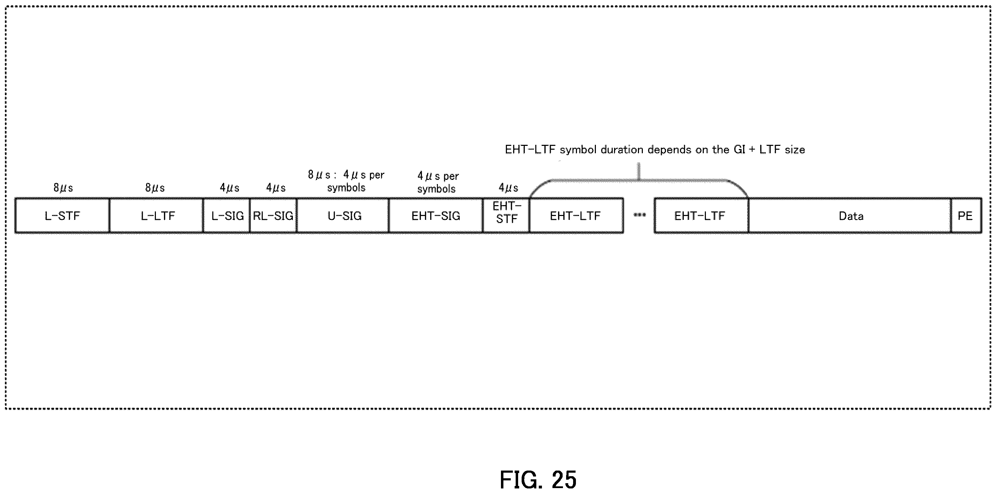

FIG. 25 illustrates an exemplary format of a downlink OFDM signal (for example, EHT MU PPDU). The difference from the format of the uplink OFDM signal (for example, FIG. 1) is the presence of an EHT-SIG field that includes control information (for example, resource allocation information) for a signal transmitted in the downlink.

### [Configuration of Radio Communication System]

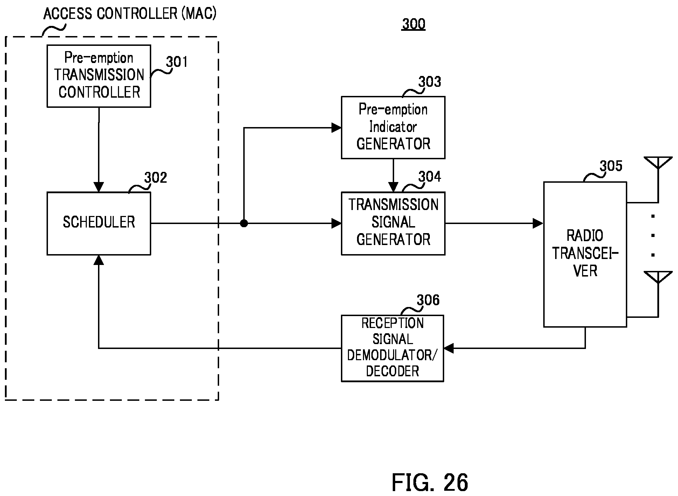

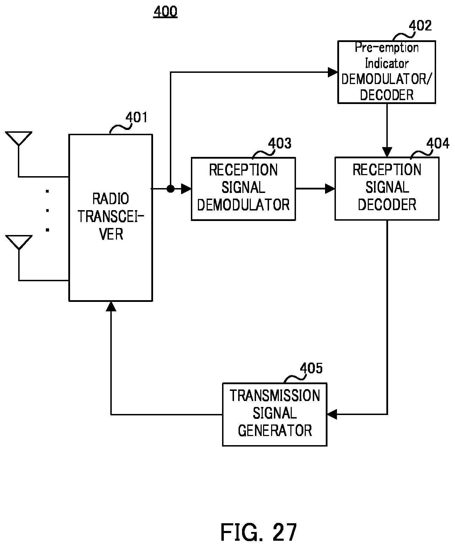

The radio communication system according to the present embodiment may include, for example, AP 300 illustrated in FIG. 26 and terminal (STA) 400 illustrated in FIG. 27. At least one of AP 300 and Terminal 400 may exist in multiple units in a radio communication system. AP 300 may transmit Pre-emption data (for example, emergency data) to terminal 400, for example. AP 100 may be, for example, an AP that supports EHT or EHTplus. For example, when communicating with an EHTplus terminal, AP 100, which is the communication partner, may support EHTplus.

Further, terminal 400 may be, for example, any of an EHT terminal and an EHTplus terminal. For example, terminal 400 separates data for each terminal 400 from the resources allocated to terminals 400 from the reception signals, and performs reception processing.

Further, AP 300 may have backward compatibility. For example, AP 300 that supports EHTplus may be capable of communication with an HE terminal and an EHT terminal using a Trigger frame in addition to an EHTplus terminal.

### [Configuration Example of AP 300]

FIG. 26 is a block diagram illustrating an exemplary configuration of AP 300. AP 300 illustrated in FIG. 26 may include, for example, Pre-emption transmission controller 301, scheduler 302, Pre-emption Indicator generator 303, transmission signal generator 304, radio transceiver 305, and reception signal demodulator/decoder 306.

For example, Pre-emption transmission controller 301 and scheduler 302 may be included in an access controller (for example, MAC processor).

Pre-emption transmission controller 301, for example, when detecting the occurrence of Pre-emption data (for example, emergency data) during the transmission of downlink data, indicates the resource allocation for Pre-emption transmission (or the occurrence of Pre-emption transmission) to scheduler 302.

Scheduler 302 may perform scheduling for terminal 400, for example.

For example, scheduler 302 performs downlink resource allocation for terminal 400 that does not perform Pre-emption transmission and performs an existing (or normal) MU-PPDU transmission (for example, non-Pre-emption transmission), determines information for identifying terminal 400 (for example, terminal ID) and radio resource information (allocation band, MCS, etc.) for each terminal 400, and outputs the determined information to transmission signal generator 304. Further, in this case, scheduler 302 outputs information indicating that Pre-emption has not occurred at the present time to Pre-emption Indicator generator 303.

Further, for example, in a case where the occurrence of Pre-emption is indicated from Pre-emption transmission controller 301 (in a case where the resource allocation for Pre-emption transmission is indicated), scheduler 302 performs the resource allocation for the downlink for Pre-emption, determines the terminal ID and the radio resource information for Pre-emption (allocation band or the like), and outputs the determined information to transmission signal generator 304. Further, in this case, scheduler 302 outputs information indicating that Pre-emption occurs (for example, including a frequency and a time resource in which Pre-emption occurs) to Pre-emption Indicator generator 303.

Pre-emption Indicator generator 303 generates control information (for example, Pre-emption Indicator) that indicates the occurrence of Pre-emption, based on the information inputted from, for example, scheduler 302 (including, for example, a frequency and a time resource in which Pre-emption occurs). Pre-emption Indicator generator 303 outputs the generated information to transmission signal generator 304. Note that an example of the processing in Pre-emption Indicator generator 303 will be described later.

Transmission signal generator 304 performs error correction encoding and modulation processing on the downlink control information, the downlink data, and the information inputted from Pre-emption Indicator generator 303 based on the radio resource information inputted from scheduler 302, and outputs the modulated data signal to radio transceiver 305.

For example, at the timing when Pre-emption occurs, transmission signal generator 304 may overwrite the data for non-Pre-emption with the data for Pre-emption in the frequency and time resources for Pre-emption transmission inputted from scheduler 302.

Note that, in a case where the modulated data signal is an OFDM signal, AP 300 (for example, transmission signal generator 304) may form the OFDM signal by mapping the modulated signal to a defined frequency resource, performing IFFT/IDFT processing to convert the signal into a time waveform, and adding a CP.

Radio transceiver 305 performs, for example, radio transmission processing, such as D/A conversion and up-conversion to a carrier frequency, on the modulation signal inputted from transmission signal generator 304, and transmits the signal after the radio transmission processing to terminal 400 via an antenna. Further, radio transceiver 305, for example, receives a signal transmitted from terminal 400 via an antenna, performs radio reception processing such as down-conversion to a baseband and A/D conversion on the received signal, and outputs the signal after the radio reception processing to reception signal demodulator/decoder 306.

Reception signal demodulator/decoder 306 performs, for example, demodulation processing and decoding processing on a signal inputted from radio transceiver 305, and acquires control information such as an ACK and data transmitted from terminal 400. For example, reception signal demodulator/decoder 306 may output control information such as ACK to scheduler 302. Note that, in a case where the signal inputted to reception signal demodulation/decoding section 306 is an OFDM signal, AP 300 (for example, reception signal demodulator/decoder 306) may perform CP removal processing and FFT/DFT processing.

### [Configuration Example of Terminal 400]

FIG. 27 is a block diagram illustrating an exemplary configuration of terminal 400. Terminal 400 illustrated in FIG. 27 may include, for example, radio transceiver 401, Pre-emption Indicator demodulator/decoder 402, reception signal demodulator 403, reception signal decoder 404, and transmission signal generator 405.

Radio transceiver 401 receives, for example, a reception signal via an antenna, performs radio reception processing such as down-conversion and A/D conversion on the reception signal, and outputs the signal after the radio reception processing to Pre-emption Indicator demodulator/decoder 402 and reception signal demodulator 403. Further, radio transceiver 401, for example, performs radio transmission processing such as up-conversion and D/A conversion on the signal inputted from transmission signal generator 405, and transmits the signal after the radio transmission processing from the antenna.

Pre-emption Indicator demodulator/decoder 402 performs, for example, demodulation processing and decoding processing on data in a field including a Pre-emption Indicator in the received data inputted from radio transceiver 401, and outputs information on a resource for Pre-emption transmission to reception signal decoder 404.

Reception signal demodulator 403 performs, for example, demodulation processing on the reception data inputted from radio transceiver 401, and outputs the demodulated signal to reception signal decoder 404. Note that, in a case where the signal inputted to reception signal demodulator 403 is an OFDM signal, terminal 400 (for example, reception signal demodulator 403) may perform, for example, CP removal processing and FFT/DFT processing.

Reception signal decoder 404 excludes data in a resource in which a signal addressed to terminal 400 is not transmitted (for example, resource for Pre-emption transmission), from the data sequence after demodulation inputted from reception signal demodulator 403, based on the information on the resource of the Pre-emption transmission inputted from Pre-emption Indicator demodulator/decoder 402, performs decoding processing on data, and extracts the received data. Further, reception signal decoder 404 outputs information indicating whether the decoding of the data has succeeded (for example, a decoding result) to transmission signal generator 405.

Further, in a case where Pre-emption transmission to terminal 400 is performed, for example, reception signal decoder 404 extracts a Pre-emption signal from the demodulated data sequence inputted from reception signal demodulator 403 based on the resource information of the Pre-emption transmission, performs decoding processing on data, and extracts the Pre-emption data.

Transmission signal generator 405 generates a transmission signal such as an ACK based on the decoding result inputted from reception signal decoder 404, for example. Transmission signal generator 405 performs, for example, error correction encoding and modulation processing on the generated transmission signal, and outputs the data signal after modulation to radio transceiver 401. Note that, in a case where the modulation signal is an OFDM signal, terminal 400 (for example, transmission signal generator 405) may form the OFDM signal by performing IFFT/IDFT processing after mapping the modulation signal to the frequency resource, and adding a CP.

### [Example of Generating Pre-emption Indicator]

Next, an example of control information (for example, Pre-emption indicator) generated in Pre-emption Indicator generator 303 will be described.

AP 300 indicates to terminal 400 that Pre-emption has occurred (for example, some of the transmission signals for non-Pre-emption are not transmitted), by using control information (Pre-emption indicator), for example. Thus, terminal 400 can improve the reception performance by, for example, not applying the signal in the section where Pre-emption has occurred to the non-Pre-emption decoding processing.

Hereinafter, an example of the format of the Pre-emption Indicator will be described.

### <Pre-emption Indicator Format Example 1>

In Pre-emption Indicator format example 1, whether Pre-emption has occurred (or whether data is to be transmitted to targeted terminal 400) may be indicated for each OFDM symbol constituting the data part.

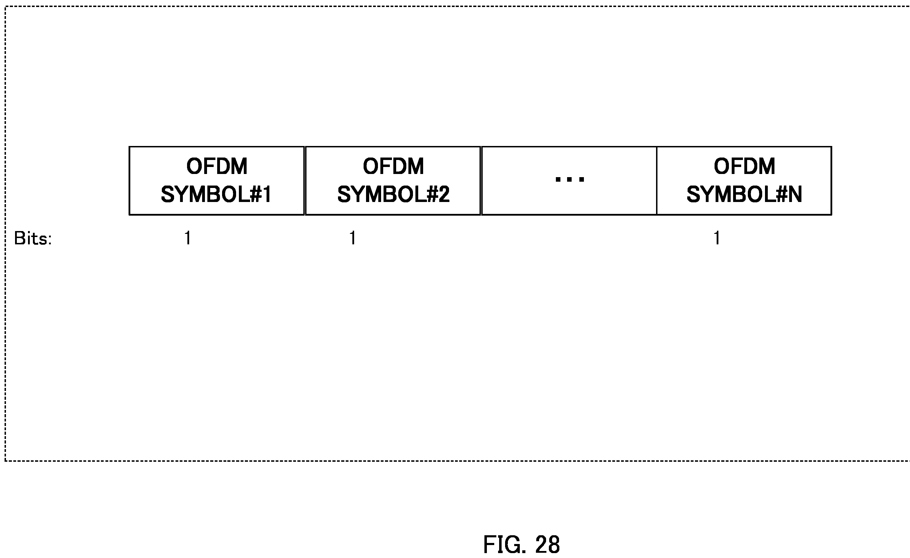

FIG. 28 illustrates a format of a Pre-emption Indicator in Pre-emption Indicator format example 1.

In the example of FIG. 28, one bit of Pre-emption Indicator may be configured for each of OFDM symbols #1 to #N. For example, in each OFDM symbol, the Pre-emption Indicator may be set to 1 in a case where Pre-emption occurs (for example, in a case where data is not transmitted to the targeted terminal 400), and the Pre-emption Indicator may be set to 0 in a case where Pre-emption does not occur (for example, in a case where data is transmitted to targeted terminal 400).

This allows terminal 400 to determine whether Pre-emption has occurred in the data part (or whether data for terminal 400 is transmitted) for each OFDM symbol.

### <Pre-emption Indicator Format Example 2>

In Pre-emption Indicator format example 2, whether Pre-emption has occurred (or whether data is to be transmitted to targeted terminal 400) in each of a plurality of OFDM symbols (for example, group) among OFDM symbols constituting the data part may be collectively indicated.

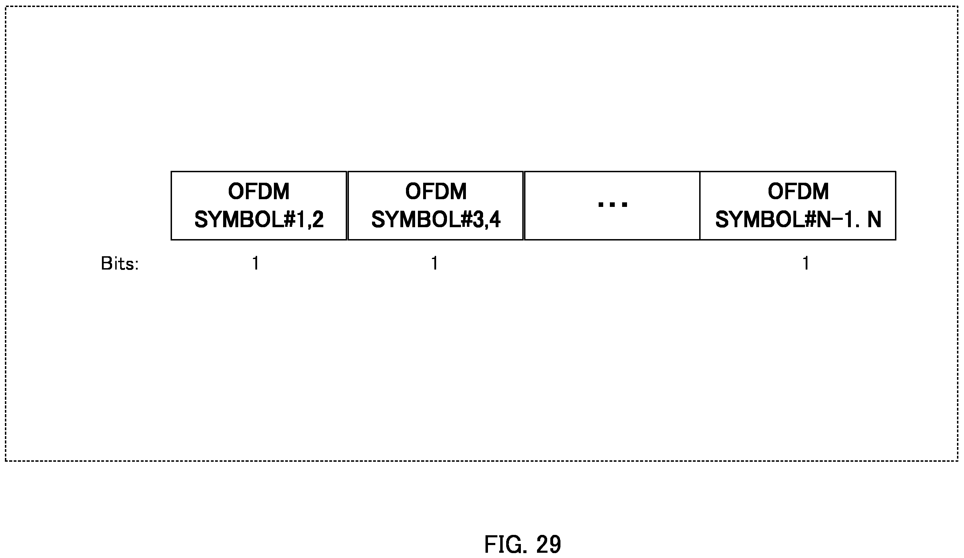

FIG. 29 illustrates a format of a Pre-emption Indicator in Pre-emption Indicator Format Example 2.

In the example of FIG. 29, one bit of Pre-emption Indicator may be configured in a two OFDM symbol unit among OFDM symbols #1 to #N. For example, in a case where Pre-emption occurs in either of the two OFDM symbols corresponding to one bit (for example, in a case where data is not transmitted to targeted terminal 400), the Pre-emption Indicator may be set to 1. Further, for example, in a case where Pre-emption does not occur in any of the two OFDM symbols corresponding to one bit (for example, in a case where data is transmitted to targeted terminal 400), the Pre-emption Indicator may be set to 0.

Thus, in Pre-emption Indicator format example 2, the number of bits of the control information can be reduced compared to Pre-emption Indicator format example 1.

The above describes format examples of the Pre-emption Indicator.

Note that the format of the Pre-emption Indicator is not limited to these and may be in another formats. Further, for example, the number of bits allocated as the Pre-emption Indicator in FIGS. 28 and 29 is not limited to one bit, and may be two or more bits. Further, the unit of the OFDM symbol corresponding to the Pre-emption Indicator is not limited to one symbol or two symbols, and may be a unit of three or more symbols. Further, Format Example 1 and Format Example 2 may be applied in combination.

AP 300 may transmit, for example, the Pre-emption Indicator after the Data part of the downlink PPDU. For example, terminal 400 may decode the Pre-emption Indicator after receiving the Data part and determine (for example, switch, change) the decoding processing for the Data part depending on the setting value of the Pre-emption Indicator. For example, in a case where Pre-emption Indicator = 0,0,0,0,1,1,0,0,0 in Format Example 1, terminal 400 may perform decoding processing with a likelihood of error correction being reduced for OFDM symbols #5 and #6.

Hereinafter, a format example for indicating a Pre-emption Indicator in a downlink PPDU will be described.

### <PPDU Format Example 1>

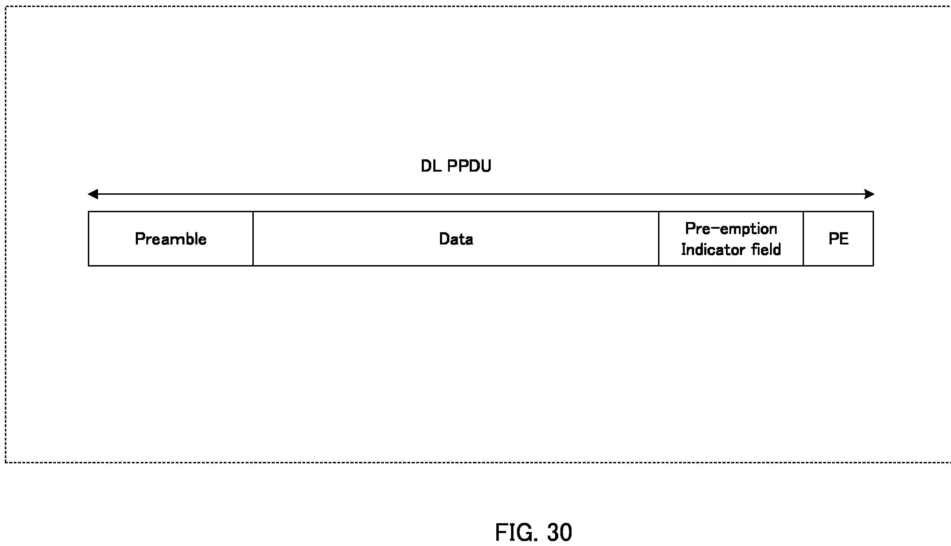

FIG. 30 illustrates a format of a PPDU in PPDU format example 1.

As illustrated in FIG. 30, a Pre-emption Indicator field for indicating a Pre-emption Indicator may be configured after the Data part (Data field) of the downlink PPDU (for example, MU PPDU).

To a coding/modulation scheme (for example, MCS) in the Pre-emption Indicator field, a fixed value (for example, BCC, QPSK, R=1/2) may be applied, for example.

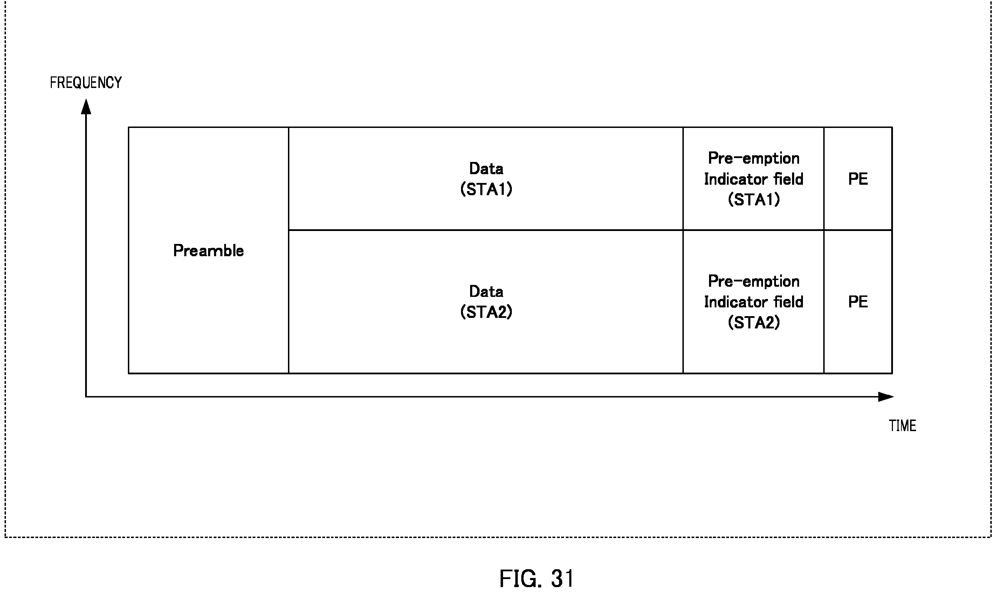

Further, for example, in a case where OFDMA is applied, a Pre-emption Indicator for terminal 400 may be indicated for each band allocated to terminal 400 as illustrated in FIG. 31. For example, the time length of the Pre-emption Indicator may be adjusted to the size of the Pre-emption Indicator addressed to terminal 400 whose time length is the longest among those of terminals 400 multiplexed in OFDMA. For example, in order to adjust the size of the Pre-emption Indicator between terminals 400, a padding bit (for example, all 0) may be added to perform the size adjustment.

### <PPDU Format Example 2>

The Pre-emption Indicator may be included in, for example, a PE (Packet Extension) field of a downlink PPDU. AP 300 may transmit a Pre-emption indicator in the PE field of the downlink PPDU, for example.

Since an arbitrary value is set in the PE field in the existing standard, using the PE field to indicate the Pre-emption indicator can reduce the overhead of control information.

The PPDU format examples have been described above.

As described above, in the present embodiment, AP 300 transmits a downlink PPDU including control information on a resource used for Pre-emption transmission that occurs during the transmission of the downlink PPDU (for example, including whether Pre-emption transmission has occurred) to terminal 400. Terminal 400 controls reception of a Pre-emption signal based on the control information included in the downlink PPDU.

Accordingly, for example, terminal 400 can receive data (for example, emergency data) that occurs while AP 300 is transmitting a signal to another terminal, based on the control information included in the downlink PPDU. Thus, according to the present embodiment, a delay can be reduced even in a case where Pre-emption transmission occurs, thereby improving the efficiency of signal transmission control in radio communication.

The embodiments of the present disclosure have been each described, thus far.

Note that, in each of the embodiments described above, the configuration of the Trigger frame, the configurations of the Common Info field, the User Info field, and the Special User Info field in the Trigger frame, and the configuration of the uplink PPDU or the downlink PPDU are not limited to the examples described above, and may be, for example, other configurations in which at least one of addition of another field and deletion of some of fields is performed, or may be other configurations in which at least one of addition of another subfield and deletion of some of subfields is performed in each field described above.

Further, in the above-described embodiments, a description has been given based on the format of 11be, as an example, but the format to which an exemplary embodiment of the present disclosure is applied is not limited to the format of 11be. An exemplary embodiment of the present disclosure may be applied to, for example, IEEE 802.11bd (Next Generation V2X (NGV)), which is the next-generation standard of IEEE 802.11p standard for automotive applications.

### (Supplement)

Information indicating whether a terminal (for example, terminal 200 or terminal 400) supports the functions, operations, or processes described in each of the above-described embodiments may be transmitted (or indicated) from the terminal to an AP (for example, AP 100 or AP 300) as, for example, capability information or a capability parameter of the terminal.

The capability information may include information elements (IEs) that individually indicate whether terminal 200 supports at least one of the functions, operations, or processes that have been described in the above-mentioned embodiments. Alternatively, the capability information may include information elements that indicate whether terminal supports a combination of any two or more of the functions, operations, or processes that have been described in the above-mentioned embodiments. The information elements may be also simply called elements.

AP may determine (or decide or assume), for example, based on the capability information received from a terminal, the functions, operations, or processes that are supported (or not supported) by the terminal, which is a transmission source of the capability information. AP may execute operations, processes, or control in accordance with a determination result based on the capability information. By way of example, AP may control Pre-emption based on the capability information received from the terminal.

Note that in a case where a terminal does not entirely support the functions, operations, or processes described in the above-mentioned embodiments, such an unsupported part of the functions, operations, or processes may be interpreted as a limitation in the terminal. For example, information or a request relating to such limitation may be indicated to AP.

The information on the capability or the limitation of a terminal may be defined by standards or may be implicitly indicated to AP in association with information known in AP 100 or information to be transmitted to AP, for example.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to an embodiment of the present disclosure includes: control circuitry, which, in operation, generates control information on a resource used for transmission of a certain signal that occurs during transmission of a first signal, the certain signal being a second signal; and transmission circuitry, which, in operation, transmits the control information.

In an embodiment of the present disclosure, the control information is included in a User Info field of a trigger frame.

In an embodiment of the present disclosure, an association ID (AID) of the User Info field including the control information indicates a value associated with the transmission of the second signal.

In an embodiment of the present disclosure, a plurality of the User Info fields in the trigger frame each include information indicating whether the User Info field is related to the transmission of the second signal.

In an embodiment of the present disclosure, an association ID (AID) of the User Info field related to the transmission of the second signal indicates a value of the AID of at least one terminal capable of transmitting the second signal.

In an embodiment of the present disclosure, a condition related to whether to permit the transmission of the second signal is defined, is indicated to a terminal by the trigger frame, or is indicated to the terminal by a signal different from the trigger frame.

In an embodiment of the present disclosure, the condition is based on at least one of a traffic type of the second signal, a time length of the second signal, and a timing of transmitting the second signal.

In an embodiment of the present disclosure, information on the condition is included in at least one of a UL-EHT MCS subfield, an SS Allocation subfield, a UL Target Received Power subfield, a Trigger Dependent User info subfield of the User Info Field, and a Reserved subfield of a Special User Info field in the trigger frame.

In an embodiment of the present disclosure, the control information is included in a Common Info field of a trigger frame.

In an embodiment of the present disclosure, a format of the second signal is different from a format of the first signal, and a preamble of the second signal is transmitted in an allocation resource for the second signal, the allocation resource being indicated by a trigger frame.

In an embodiment of the present disclosure, a timing of transmitting the second signal is configured based on a timing of transmitting the first signal.

In an embodiment of the present disclosure, the second signal is transmitted at a timing after a symbol related to Extreme High Throughput (EHT) of the first signal.

In an embodiment of the present disclosure, the second signal is transmitted in alignment with a symbol timing of the first signal.

In an embodiment of the present disclosure, the first signal and the second signal are downlink data, and the control information is included in the first signal and indicates that the second signal has occurred during the transmission of the first signal.

In an embodiment of the present disclosure, a field of the control information is configured after a data field of the first signal.

In an embodiment of the present disclosure, the control information is included in a Packet Extension (PE) field of the first signal.

A terminal according to an embodiment of the present disclosure includes: reception circuitry, which, in operation, receives control information on a resource used for transmission of a certain signal that occurs during transmission of a first signal, the certain signal being a second signal; and control circuitry, which, in operation, controls transmission or reception of the second signal based on the control information.

In a communication method according to an embodiment of the present disclosure, an access point generates control information on a resource used for transmission of a certain signal that occurs during transmission of a first signal, the certain signal being a second signal, and transmits the control information.

In a communication method according to an embodiment of the present disclosure, a terminal receives control information on a resource used for transmission of a certain signal that occurs during transmission of a first signal, the certain signal being a second signal, and controls transmission or reception of the second signal based on the control information.

The disclosure of Japanese Patent Application No. 2022-096537, filed on June 15, 2022, including the specification, drawings and abstract, is incorporated herein by reference in its entirety.

### Industrial Applicability

An exemplary embodiment of the present disclosure is useful for radio communication systems.

### Reference Signs List

100, 300 AP
101, 302 Scheduler
102 Trigger frame generator
103, 205, 304, 405 Transmission signal generator
104, 201, 305, 401 Radio transceiver
105, 202, 306 Reception signal demodulator/decoder
200, 400 Terminal
203 Trigger frame determiner
204, 301 Pre-emption transmission controller
303 Pre-emption indicator generator
402 Pre-emption indicator demodulator/decoder
403 Reception signal demodulator
404 Reception signal decoder

## Claims

1. An access point, comprising:
control circuitry, which, in operation, generates control information on a resource used for transmission of a certain signal that occurs during transmission of a first signal, the certain signal being a second signal; and
transmission circuitry, which, in operation, transmits the control information.

2. The access point according to claim 1, wherein
the control information is included in a User Info field of a trigger frame.

3. The access point according to claim 2, wherein
an association ID (AID) of the User Info field including the control information indicates a value associated with the transmission of the second signal.

4. The access point according to claim 2, wherein
a plurality of the User Info fields in the trigger frame each include information indicating whether the User Info field is related to the transmission of the second signal.

5. The access point according to claim 4, wherein
an association ID (AID) of the User Info field related to the transmission of the second signal indicates a value of the AID of at least one terminal capable of transmitting the second signal.

6. The access point according to claim 2, wherein
a condition related to whether to permit the transmission of the second signal is defined, is indicated to a terminal by the trigger frame, or is indicated to the terminal by a signal different from the trigger frame.

7. The access point according to claim 6, wherein
the condition is based on at least one of a traffic type of the second signal, a time length of the second signal, and a timing of transmitting the second signal.

8. The access point according to claim 6, wherein
information on the condition is included in at least one of a UL-EHT MCS subfield, an SS Allocation subfield, a UL Target Received Power subfield, a Trigger Dependent User info subfield of the User Info Field, and a Reserved subfield of a Special User Info field in the trigger frame.

9. The access point according to claim 1, wherein
the control information is included in a Common Info field of a trigger frame.

10. The access point according to claim 1, wherein
a format of the second signal is different from a format of the first signal, and
a preamble of the second signal is transmitted in an allocation resource for the second signal, the allocation resource being indicated by a trigger frame.

11. The access point according to claim 1, wherein
a timing of transmitting the second signal is configured based on a timing of transmitting the first signal.

12. The access point according to claim 11, wherein
the second signal is transmitted at a timing after a symbol related to Extreme High Throughput (EHT) of the first signal.

13. The access point according to claim 11, wherein
the second signal is transmitted in alignment with a symbol timing of the first signal.

14. The access point according to claim 1, wherein
the first signal and the second signal are downlink data, and
the control information is included in the first signal and indicates that the second signal has occurred during the transmission of the first signal.

15. The access point according to claim 14, wherein
a field of the control information is configured after a data field of the first signal.

16. The access point according to claim 14, wherein
the control information is included in a Packet Extension (PE) field of the first signal.

17. A terminal, comprising:
reception circuitry, which, in operation, receives control information on a resource used for transmission of a certain signal that occurs during transmission of a first signal, the certain signal being a second signal; and
control circuitry, which, in operation, controls transmission or reception of the second signal based on the control information.

18. A communication method, comprising:
generating, by an access point, control information on a resource used for transmission of a certain signal that occurs during transmission of a first signal, the certain signal being a second signal; and
transmitting, by the access point, the control information.

19. A communication method, comprising:
receiving, by a terminal, control information on a resource used for transmission of a certain signal that occurs during transmission of a first signal, the certain signal being a second signal; and
controlling, by the terminal, transmission or reception of the second signal based on the control information.
